# EUROPÄISCHE PATENTSCHRIFT

(11) **EP 0 594 086 B1**
(45) Veröffentlichungstag und Bekanntmachung des Hinweises auf die Patenterteilung: **22.05.1996**
(21) Anmeldenummer: 93116748.0
(22) Anmeldetag: 16.10.1993
(51) Int. Cl.: B23K 11/25, B23K 11/31, G01B 11/16, G01D 5/26, G01L 1/24

(54) **Schweisszange sowie elektrischer Sensor**
Electrode holder and electric sensor
Pince de soudage et détecteur électrique

(30) Priorität: 20.10.1992 DE 4235308; 19.02.1993 DE 4305095; 23.02.1993 DE 4305364
(43) Veröffentlichungstag der Anmeldung: 27.04.1994
(73) Patentinhaber: BAVARIA-TECH, WERNER SCHLATTL, D-94034 Passau (DE)
(72) Erfinder: Schlattl, Werner, D-94161 Ruderting (DE); Plöchinger, Ernst, D-94121 Salzweg (DE)
(74) Vertreter: Graf, Helmut, Dipl.-Ing.

(56) Entgegenhaltungen:
- EP-A- 0 093 545
- DE-A- 3 833 287
- DE-C- 3 241 897
- FR-A- 2 436 368
- GB-A- 2 183 331
- US-A- 4 798 951
- US-A- 5 111 020
- US-A- 5 140 155

## Beschreibung

Die Erfindung bezieht sich auf eine Schweißzange, insbesondere Punktschweißzange, gemäß Oberbegriff Patentanspruch 1 (siehe US-A-5 111 020).

Punktschweißzangen werden in der Industrie und hier vor allem in der Fahrzeugindustrie, im Karosseriebau oder dergl. umfangreich eingesetzt, insbesondere auch als Schweißzangen für Schweiß-Roboter. Durch eine Betätigungseinrichtung, die als Stellglied beispielsweise einen Pneumatik-Zylinder oder auch einen Hydraulik-Zylinder (auch Wasser-Hydraulik) aufweist, sind die Elektroden einer solchen Schweißzange aufeinander zu sowie voneinander weg bewegbar, und zwar zwischen einer Ausgangsposition, in der die Elektroden einen größeren Abstand voneinander aufweisen, und einer Schweißposition (geschlossenen Schweißzange), in der die Elektroden gegen das in der Regel von Blechen gebildete Schweißgut angepreßt anliegen, und zwar mit einer Kraft, die auch als "Elektrodenkraft" bezeichnet wird. Die Elektroden sind dabei an Schweißzangenelementen, d.h. in der Regel an jeweils einem Ende einer sogenannten Pinole vorgesehen, und zwar beispielsweise mit Polkappen. Die Pinolen sind relativ zueinander bewegbar bzw. schwenkbar, wofür diese Pinolen in der Regel an einem Ende eines Pinolenhalters vorgesehen sind. Die beiden Pinolenhalter sind über ein Schwenklager miteinander verbunden.

Die Qualität eines Schweißpunktes beim Punktschweißen wird im wesentlichen von drei Schweiß-Parametern bestimmt, nämlich vom Schweißstrom, von der Schweißzeit und der Elektrodenkraft. Der Schweißstrom, aber auch noch die Schweißzeit lassen sich mit herkömmlichen Mitteln steuern und/oder überwachen. Bei bisher bekannten Punktschweißzangen ist es aber weder möglich, die tatsächliche Elektrodenkraft während des Schweißvorganges, d.h. insbesondere während der Zeit nach dem Schließen der Schweißzange bis zum Wiederöffnen dieser Schweißzange zu erfassen, noch ist es möglich, den Schweißvorgang in Abhängigkeit von der gemessenen Elektrodenkraft zu steuern, zumal die tatsächlich anliegende Elektrodenkraft durch zahlreiche Fehler in der Mechanik der betreffenden Schweißzange, beispielsweise fehlerhafte Pinolenhalter, überalterte Pinolen, defekte Lager für die Pinolenhalter und defekte Betätigungseinrichtung usw. beeinflußt wird.

Ist die Elektrodenkraft während der eigentlichen Schweißphase (bei eingeschaltetem Schweißstrom) zu hoch, so führt dies dazu, daß das Material des Schweißgutes in den Spalt zwischen dieses Schweißgut gedrückt wird, sich also bei zu kleinem Schweißpunkt auch eine zu große Spaltbreite ergibt. Die Festigkeit des betreffenden Schweißpunktes ist unzureichend. Das Schweißgut wird durch die Schweißzange in unzulässiger Weise verformt und es tritt ein starker Elektrodenverschleiß auf.

Ist die Schweißkraft zu niedrig, so tritt ein inneres Spritzen des verflüssigten Schweißgutes ein, d.h. die unter hohem Druck stehende Schmelze des Schweißgutes spritzt in die Fuge zwischen dem Schweißgut. Der Schweißpunkt selbst weicht von der erwünschten runden Form ab. Das Schweißgut und die Elektroden legieren an, das Schweißgut verfärbt sich und der Schweißstrom ist nicht in der gewünschten Weise auf den Schweißpunkt konzentriert, sondern fließt über Nebenschlüsse. Insgesamt ergeben sich bei zu niedriger Schweißkraft ebenfalls eine mangelhafte Qualität für den Schweißpunkt sowie ein starker Elektrodenverschleiß.

Obwohl die vorgenannten Zusammenhänge seit Jahrzehnten den Fachkreisen bekannt sind, gibt bisher keine Schweißzangen, bei denen die Elektrodenkraft und deren Änderungen beim Schweißvorgang erfaßt werden können, und zwar beispielsweise für eine Kontrolle der Qualität des hergestellten Schweißpunktes und/oder für eine Steuerung des Schweißvorgangs.

Bekannt ist eine elektrische Schweißzange (DE-OS 38 33 287) mit einer zangenartigen Spann- bzw. Klemmeinrichtung, welche aus zwei gelenkig miteinander verbundenen und durch eine Betätigungseinrichtung relativ zueinander schwenkbaren Spann- oder Klemmarmen besteht, sowie mit zwei, jeweils eine Elektrode aufweisenden Elektrodenarmen, die zangenartig schwenkbar miteinander verbunden sind, und zwar die gleiche Schwenkachse wie die beiden Klemmarme. Zwischen jedem Klemmarm und einem Elektrodenarm ist jeweils eine Druckfeder derart vorgesehen, daß beim Schweißen bzw. beim Schließen der Schweißzange durch Betätigungseinrichtung zunächst die beiden Klemmarme das Schweißgut zwischen sich festklemmen und dann anschießend die Elektroden gegen das Schweißgut zur Anlage kommen, und zwar mit einer Kraft, die durch die Druckfedern bestimmt ist. die im Bereich der den Elektroden entfernt liegenden und miteinander gelenkig verbundenen Enden der Elektrodenarme angreifen. Angestrebt ist eine möglichst konstante, allein durch die Druckfedern bestimmte und von der Betätigungseinrichtung unabhängige Elektrodenkraft nach dem Schließen der Zange bzw. nach dem Anliegen der Klemmarme gegen das Schweißgut. An dem Angriffspunkten der Druckfedern, die (Angriffspunkte) sich im Bereich der den Elektroden entfernt liegenden und miteinander gelenkig verbundenen Enden der Elektrodenarme und damit weit entfernt von den Elektroden und dem jeweiligen Schweißpunkt befinden, ist ein piezo-elektrischer Druckmesser vorgesehen, mit der die während des Schweißvorganges im wesentlichen konstante, von den Federn entwickelte Kraft erfaßt wird.

Eine genaue Erfassung der Elektrodenkraft, insbesondere auch eine Erfassung von zeitlichen Änderungen der Elektrodenkraft während des Schweißvorganges ist bei dieser bekannten Schweißzange nicht möglich, und zwar ebenso wenig wie eine Steuerung der Elektrodenkraft in Abhängigkeit von gemessenen Werten.

Bekannt ist weiterhin eine Schweißvorrichtung zum elektrischen Widerstandspunktschweißen (DE-PS 32 41 897), bei der eine die Schweißelektroden aufweisende Elektrodenhalteranordnung aus einem unteren, festen Elektrodenhalter und aus einem oberen, beweglichen Elektrodenhalter besteht und die Elektroden jeweils an einem Ende jedes Elektrodenhalters vorgesehen sind. Auf den oberen, beweglichen Elektrodenhalter wirkt zur Erzeugung der Elektrodenkraft über eine Druckfeder der Stempel einer äußeren Betätigungseinrichtung ein. Zwischen der Feder und dem Stempel ist eine Dehnungsmeßstreifen-Kraftmeßdose vorgesehen, mit der die Kraft der Feder und somit die auf das Schweißgut ausgeübte Anpreßkraft ermittelt werden.

Bekannt ist auch eine Schweißvorrichtung zum Widerstandspunktschweißen, bei der an einem Vorrichtungsgestell fest ein unterer, ortsfester Elektrodenhalter und an einem Tragarm, der über Biegebalken mit dem Vorrichtungsgestell verbunden ist, ein oberer Elektrodenhalter vorgesehen sind, der durch eine Betätigungseinrichtung zur Erzeugung der Elektrodenkraft relativ zu dem oberen Tragarm in vertikaler Richtung bewegbar ist. Durch Dehnungsmeßstreifen wird die beim Schweißen auftretende Verformung der Biegebalken erfaßt.

Nachteilig bei diesen bekannten Schweißvorrichtungen ist zunächst, daß die Elektrodenhalter ortsfest an einem Maschinengestell vorgesehen sind, wobei lediglich ein Elektrodenhalter relativ zu dem anderen Elektrodenhalter in einer vertikalen Ebene bewegbar ist. Diese Schweißvorrichtungen sind also nicht als Schweißroboter brauchbar, wie sie insbesondere in der Fahrzeugindustrie bzw. im Karosseriebau benötigt werden.

Nachteilig ist aber bei allen bekannten Schweißzangen und Schweißvorrichtungen, daß die piezo-elektrischen Sensoren, die Druckmeßdosen oder die Dehnungsmeßstreifen in einem erheblichen Abstand von der Schweißstelle und auch mit Abstand vom Strompfad des Schweißstromes angeordnet werden müssen, um Beeinflussungen des jeweiligen Sensors durch elektromagnetische Felder zu vermeiden. Durch die Anordnung des jeweiligen Sensors im Abstand von der Schweißstelle ergeben sich erhebliche Verfälschungen im Meßergebnis. Insbesondere können auch dynamische Änderungen der Schweißkraft, wie sie während des Schweißvorganges auftreten, nicht erfaßt werden.

Nachteilig ist schließlich bei allen bekannten Schweißzangen und Schweißvorrichtungen auch, daß eine zusätzliche Elastizität in Form der Druckfedern bzw. der Biegebalken erforderlich ist, die (Elastizität) insbesondere auch in Verbindung mit den vorhandenen Massen eine Beeinträchtigung des Meßergebnisses bedeutet und auch konstruktiv einen zusätzlichen Aufwand bedeutet.

Bekannt ist weiterhin (US-A-5 111 020) ein Schweißroboter für Widerstands- oder Punktschweißung, bei dem an Elektrodenhaltern deren Verformung messende Piezoelektrische Sensoren vorgesehen sind. Nachteilig ist hierbei, daß die von diesen Sensoren über Meßleitungen gelieferten Signale durch die hohen Schweißströme gestört werden, so daß insbesondere während des Schweißvorganges ein genaues Messen der jeweiligen Elektrodenkraft und deren Änderung nicht möglich ist. Wie bei allen derzeit bekannten Punktschweißzangen besteht auch bei diesem bekannten Schweißroboter die Gefahr eines elektrischen Nebenschlusses an der Kontaktstelle, da ein Teil des Schweißstromes über den Nebenschluß fließt. Dadurch werden die Schweißpunkte auch nicht ordnungsgemäß geschweißt, und die Schweißpunkte erhalten eine reduzierte Festigkeit, was zu einem Qualitätsrisiko des gesamten Fahrzeuges und weiterhin zu Knarzgeräuschen im Fahrzeug führen kann, die später nicht mehr zu beheben sind.

Bekannt sind schließlich auch optoelektrische Sensoren (FR-A-2 436 368, EP-A-93 545) zur Messung von Verformungen, bei denen Licht über wenigstens eine Lichtleiter einer Lichtstrecke zugeführt wird und das Licht von der Lichtstrecke über eine weitere Lichtleiter an eine Schaltungsanordnung geleitet wird, wobei das rückgeführte Licht oder die in der Lichtstrecke absorbierte Lichtmenge eine Funktion der Verformung ist. Für eine Anwendung zur Überwachung der Elektrodenkraft bei Schweißzangen sind diese bekannten Sendoren aber weder geeignet, noch bestimmt.

Aufgabe der Erfindung ist es, eine Schweißzange aufzuzeigen, bei der die tatsächliche, an den Elektroden anstehende Elektrodenkraft zu jedem Zeitpunkt während des Schweißvorgangs, insbesondere auch während der eigentlichen Schweißphase bzw. Schweißzeit exakt und störungsfrei erfaßt werden kann.

Zur Lösung dieser Aufgabe ist eine Schweißzange entsprechend dem Patentanspruch 1 ausgebildet.

Bei der erfindungsgemäßen Schweißzange kann zu jedem Zeitpunkt des Schweißvorganges die anstehende Elektrodenkraft exakt gemessen und aufgrund dieses Meßergebnisses der Schweißvorgang überwacht und/oder gesteuert werden. Weiterhin ist es auch möglich, aufgrund der gemessenen Elektrodenkraft den jeweiligen Schweißpunkt bzw. dessen Qualität zu beurteilen und aufgrund dieser Beurteilung zu entscheiden, ob ggf. ein weiterer, benachbarter Schweißpunkt erforderlich ist und/oder ob ggf. auf einen oder mehrere vorgegebene Schweißpunkte verzichtet werden kann usw. Diese Beurteilung der Güte eines Schweißpunktes aufgrund der gemessenen Elektrodenkraft und die weiteren, aufgrund dieser Beurteilung sich ergebenden Entscheidungen bzw. Steuerungen werden bevorzugt in einer elektronischen Steuereinrichtung nach einem vorgegebenen Programm durchgeführt. Weiterhin ist es auch möglich, für jeden Schweißpunkt im Verlauf der Elektrodenkraft für spätere Auswertungen, Überprüfungen usw. aufzuzeichnen.

Dadurch, daß ein optischer Sensor zur Fassung der Elektrodenkraft verwendet wird, dessen Wirkungsweise darauf beruht, daß die über die Lichtstrecke bzw. den Lichtweg im Sensorelement übertragene Lichtmenge eine Funktion der mechanischen Veränderung oder Verformung des Sensorelementes bzw. des den Lichtweg aufweisenden Teils dieses Sensorelementes ist. Die Verbindung zwischen dem Sensor oder dem Sensorelement und der räumlich entfernten opto-elektronischen Einheit besteht ausschließlich über die wenigstens zwei Lichtleiter. Trotz einer hohen Meßgenauigkeit und Meßempfindlichkeit, d.h. der Möglichkeit, bereits geringfügige mechanische Änderungen zu erfassen, sowie trotz einer hohen Grenzfrequenz ist das Sensorelement unempfindlich gegenüber äußeren Störeinflüssen, insbesondere gegenüber elektrischen Spannungs- und Magnetfeldern, gegenüber elektromagnetischen Feldern oder Wellen, gegenüber hohen Temperaturen usw. Weiterhin läßt sich das Sensorelement robust herstellen, und zwar derart, daß es selbst bei größeren Stößen oder Schlägen nicht beschädigt wird.

Insbesondere besteht bei der Erfindung die Möglichkeit einer genauen Messung der Elektrodenkraft auch bei fließendem Schweißstrom und nicht nur bei fehlendem Schweißstrom bzw. beim Nulldurchgang des sich periodisch ändernden Schweißstromes. Die Messung der Elektrodenkraft während des Schweißstromes ist wesentlich, da die Elektrodenkraft bei vorhandenem Schweißstrom und bei fehlendem Schweißstrom unterschiedlich ist und für die Überwachung und/oder Steuerung die Elektrodenkraft bei fließendem Schweißstrom interessiert.

Bei der Erfindung wird die Elektrodenkraft unmittelbar an dem Schweißzangenelement aufgrund der elastischen Verformung dieses Elementes während des Schweißvorganges erfaßt, ohne daß für die Messung eine zusätzliche Elastizität, beispielsweise in Form von Federn, Biegemeßbalken usw. vorgesehen werden müssen. Weiterhin kann das Sensorelement unmittelbar an der Schweißstelle oder an dem Strompfad für den Schweißstrom, d.h. an den Schweißstrom führenden Teilen der Schweißzange vorgesehen werden. Eine Rücksichtnahme auf elektromagnetische Felder ist nicht erforderlich. Weiterhin ist für die Messung der Elektrodenkraft keine besondere Konstruktion der Pinole oder des Pinolenhalters erforderlich.

Da bei der Erfindung eine dynamiche Messung der Elektrodenkraft möglich ist, d.h. eine Messung der zeitlichen Änderungen der Elektrodenkraft, ist aufgrund des Meßergebnisses erstmals auch eine Aussage über die Qualität eines Schweißpunktes möglich.

Durch die hohe Meßgenauigkeit und Meßempfindlichkeit sowie durch die hohe Grenzfrequenz, die beispielsweise bei 10 kHz liegt, läßt sich der zeitliche Verlauf der Elektrodenkraft nach dem Schließen der Schweißzange während des Prellschlages genau erfassen. Es kann hierbei insbesondere auch festgestellt werden, ob dieser Prellschlag innerhalb einer vorgegebenen Zeitperiode beendet ist, sich die Mechanik der betreffenden Schweißzange also in einem ordnungsgemäßen Zustand befindet. Weiterhin kann der Verlauf der Elektrodenkraft während der anschließenden Vorhaltezeit gemessen und überwacht werden, und zwar insbesondere auch in Hinblick auf das Erreichen eines bestimmten Wertes der Elektrodenkraft, bei dem das Einschalten des eigentlichen Schweißstromes erfolgt. Weiterhin ist die Messung der Elektrodenkraft während der eigentlichen Schweißphase bzw. Schweißzeit möglich, wobei durch die hohe Meßempfindlichkeit und Meßgenauigkeit bei der erfindungsgemäßen Schweißzange die beim Schweißen auftretende thermische Volumenänderung und der hieraus resultierende Anstieg der Elektrodenkraft während der Schweißphase festgestellt werden können sowie auch die Volumenänderung beim sogenannten "Nachschmieden" in der Nachhaltezeit. Hieraus ist nicht nur eine Beurteilung der Qualität des jeweiligen Schweißpunktes möglich, sondern auch eine optimale Steuerung der Schweißzeit, so daß mit der Erfindung u.a. auch eine Steigerung der Prozeßsicherheit sowie eine Taktoptimierung beim Schweißen erreichbar sind.

Bei einer Ausführungsform der Erfindung ist wenigstens eine Pinole bzw. ein Pinolenhalter zumindest in einem solchen Bereich, in dem beim Schweißen ein Kontakt mit dem Schweißgut möglich ist, isoliert ausgebildet. Die Isolierung besteht dabei aus einem isolierenden und an seiner Außenfläche scheuer- bzw. abriebfest ausgebildeten Überzug. Dieser Überzug besteht beispielsweise aus einem Edelstahl und umschließt dann einen weiteren Überzug aus isolierendem Material. Bevorzugt ist der abriebfeste Überzug von einem Keramikgewebe oder von Keramikwatte gebildet. In diesem Fall kann der Überzug auch einschichtig ausgeführt sein, d.h. der keramische Werkstoff bildet gleichzeitig die elektrische Isolierung.

Dadurch, daß die Isolierung aus einem wenigstens einschichtigen, elektrisch isolierenden Überzug besteht, der an seiner Außenfläche scheuer- bzw. abriebfest ausgeführt ist und somit auch scharfen Blechkanten standhält, läßt sich für die Isolierung eine hohe Standzeit erreichen.

Bei einer Ausführung der Erfindung ist die Isolierung wenigstes zweischichtig ausgebildet und besteht aus einem Isoliermaterialüberzug und einem darüber angeordneten Scheuerschutzüberzug, und beide Überzüge dauerhaft miteinander verbunden sind. Der Isoliermaterialüberzug besteht hierbei vorzugsweise aus epoxidharzgetränktem Glasgewebeband, z.B. Betabrace, kann aber auch aus Kohlefaser oder dergleichen bestehen, so daß eine einwandfreie elektrische Isolierung gewährleistet ist. Die scheuerfesten Überzüge sind in Form von Edelstahl-Kreuzgewebe ausgebildet und werden über die Pinole geschoben; sie passen sich bei diesem Überstreifen an gekrümmte Pinolen an, so daß der Überzug für unterschiedliche Pinolenformen verwendet werden kann. Zwischen dem Glasgewebeband bzw. dem Betabrace und dem Edelstahlgewebe ist eine dauerhafte Verbindung hergestellt, indem der Epoxidharzkleber, mit dem das Gewebeband getränkt ist, zwischen dem Gewebe hervortritt und bei etwa 150 °C aushärtet.

Anstelle eines Edelstahlgewebes kann als Scheuerschutzüberzug eine Edelstahlhülse, die vorzugsweise geschlitzt ist, oder aber ein Edelstahlband, das gewickelt wird, verwendet werden. Derartige Edelstahlhülsen bzw. -bänder sind jedoch in ihrer Anwendung beschränkt auf gerade oder in geringem Ausmaß gekrümmte Pinole.

Vergleichbare, hochqualitative Scheuerschutzüberzüge sind im Rahmen vorliegender Erfindung ebenfalls verwendbar. Beispielsweise eignet sich hierfür ein Werkstoff Mehanite, der magnetfeldundurchlässig ist und mit dem, da für das Magnetfeld keine Energie benötigt wird, beim Schweißen ein höherer Wirkungsgrad erzielt werden kann.

Bei einer bevorzugten Ausführungsform ist die Isolierung bzw. die auf die Pinole oder Pinolenhalter aufgebrachte Ummantelung zumindest in einem Teilbereich oder in wenigstens einer Schicht ein Keramikgewebe oder eine Keramikwatte. Bei dieser Ausführung bildet das Keramikgewebe bzw. die Keramikwatte bevorzugt die scheuer-bzw. abriebfeste Außenfläche der Isolierung, die dann beispielsweise nur aus Keramikgewebe oder Keramikwatte besteht.

Die auf die Pinole oder den Pinolenhalter aufgebrachte Isolierung kann auf besonders einfache Weise an die Formgebung der jeweiligen Pinole bzw. des jeweiligen Pinolenhalters, aber auch an die Form der zu verschweißenden Bleche angepaßt werden.

Mit dem erfindungsgemäßen Vorschlag lassen sich hohe Standzeiten erreichen. Dadurch, daß die Isolierung nach der Erfindung in begrenztem Umfang flexibel ausgebildet ist, ergibt sich eine besonders gute Anpassungsfähigkeit an unterschiedliche Pinolenformen. Mit einer derartigen Isolierung können Schweißfehler beim Punktschweißen entscheidend verringert werden, wodurch zusätzliche Sicherheits-Schweißpunkte entfallen können, so daß insgesamt eine Reduzierung der Fertigungszeit und entsprechend eine Kostensenkung erreicht werden können. Ferner kann der Sicherheitsabstand zwischen den Pinolen und den zu verschweißenden Blechen verkleinert werden, so daß damit eine verkleinerte Fensterfläche und ein niedrigerer Schweißstrom, kleinere Zangen und eine bessere Handhabung bei geringerem Gewicht erzielt werden können.

Weiterbildungen der Erfindung sind Gegenstand der Unteransprüche.

Die Erfindung wird im folgenden anhand der Figuren an einem Ausführungsbeispiel näher erläutert. Es zeigen:
- Fig. 1: in vereinfachter Darstellung und im Blockdiagramm eine Ausführungsform des erfindungsgemäßen Sensors, zusammen mit einer opto-elektronischen Einheit;
- Fig. 2: in vereinfachter Darstellung das Sensorelement des Sensors nach Fig. 1 an einer Punktschweißzange;
- Fig. 3: in vereinfachter Darstellung und in Draufsicht eine abgewandelte Ausführung;
- Fig. 4: in vereinfachter Darstellung das Sensorelement der Fig. 3 in Seitenansicht und in seiner Befestigung an einem rohrartigen Meßobjekt;
- Fig. 5: in vereinfachter perspektivischer Darstellung eine weitere abgewandelte Ausführung des Sensorelementes;
- Fig. 6: in vereinfachter Darstellung das Sensorelement der Fig. 5 im Längsschnitt;

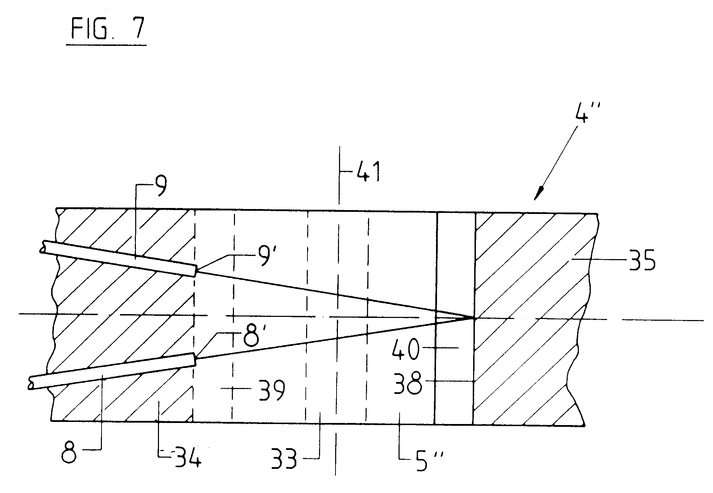

- Fig. 7: das Sensorelement der Fig. 5 im Schnitt entsprechend der Linie I - I der Fig. 6;
- Fig. 8: in schematischer Darstellung ein Elektrodenkraft-Zeit-Diagramm der Schweißzange;
- Fig. 9: in vereinfachter Darstellung und in Draufsicht einen Schweißplatz;
- Fig. 10: eine Punktschweißzange in seitlicher Ansicht,
- Fig. 11: einen Schnitt A-A durch eine Pinole nach Fig. 10 und
- Fig. 12: einen Schnitt B-B durch eine Pinole nach Fig. 10;
- Fig. 13: einen Schnitt ähnlich den Fig. 11 oder 12 bei einer weiteren, bevorzugten Ausführung der Erfindung.

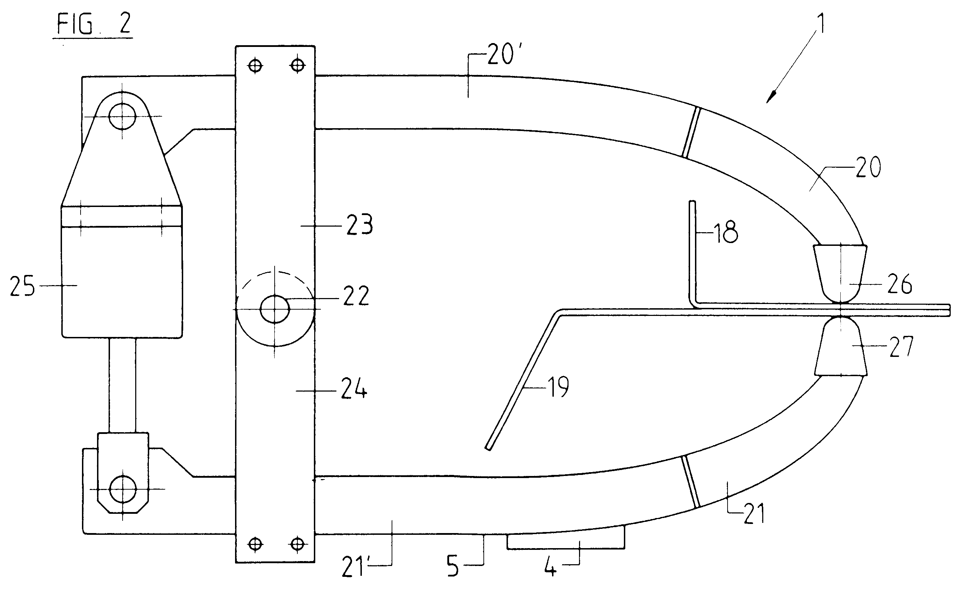

Fig. 2 zeigt eine Schweißzange 1 zum Punktschweißen zweier Bleche 18 und 19. Die Schweißzange besteht aus zwei Pinolen 20 und 21, die an jeweils einem Ende eines Pinolenhalters 20' bzw. 21' befestigt sind. Diese sind gelenkig über eine Gelenkstelle 22 und über Gelenkarme 23 und 24 miteinander verbunden sind. Die beiden Gelenkarme 23 und 24 sind jeweils zwischen den beiden Enden des zugehörigen Pinolenhalters 20' bzw. 21' befestigt. An einem Ende wirkt zwischen den Pinolenhaltern 20' und 21' eine bei der dargestellten Ausführungsform von einem Pneumatik-Zylinder gebildete Betätigungseinrichtung 25. An ihrem gekrümmten freien Ende sind die Pinolen mit Polkappen 26 und 27 versehen, die beim Punktschweißen die beiden Bleche 18 und 19 zwischen sich aufnehmen und durch die aktivierte Betätigungseinrichtung 25 mit vorgegebener Kraft gegen die Bleche 18 und 19 angepreßt anliegen. Über die jeweils als elektrische Leiter ausgebildeten Pinolenhalter 20' und 21' sowie Pinolen 20 und 21 und über die mit diesen elektrisch verbundenen Polkappen 26 und 27 wird der Schweiß-Strom zugeführt bzw. abgeführt.

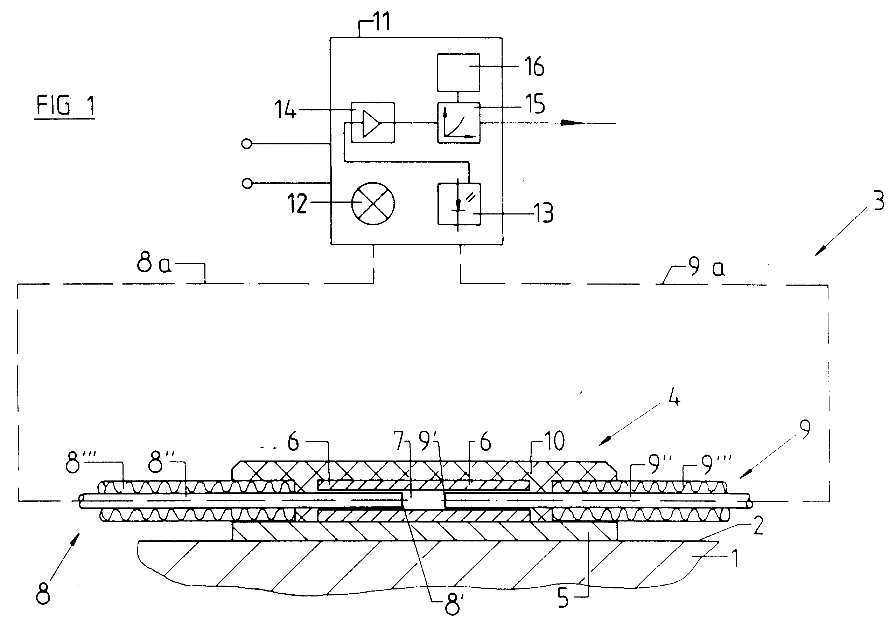

Um einen Schweißpunkt zuverlässig herzustellen, müssen verschiedene Parameter eingehalten werden, so beispielsweise auch ein bestimmter Anpreßdruck für die Elektroden oder Polkappen 26 und 27 gegen die Bleche 18 und 19. Zur Überwachung und/oder Steuerung dieses Parameters ist an dem in der Fig. 1 unteren Pinolenhalter 21' bzw. an der dortigen außenliegenden Fläche 2 ein Sensor 3 oder dessen Sensorelement 4, 4' oder 4'' derart angebracht, daß mit diesem Sensorelement die beim Andrücken der Polkappen 26 und 27 gegen die Bleche 18 und 19 auftretende und von der Anpreßkraft abhängige elastische Biegung des Pinolenhalters 21' und hieraus die Anpreßkraft ermittelt werden kann, die beispielsweise in einem Regelkreis als Sollwert mit einem vorgegebenen Istwert verglichen wird, um so die Betätigungseinrichtung 25 zu steuern oder zu regeln.

Insbesondere ist es möglich, die beim Schließen der Schweißzange ansteigende Elektrodenkraft zu messen und beim Erreichen eines vorgegebenen Wertes den Schweißstrom einzuschalten, also eine Einschaltung des Schweißstromes abhängig von der tatsächlich gemessenen Elektrodenkraft vorzunehmen.

Bei der in der Fig. 1 dargestellten Ausführungsform weist das dortige Sensorelement 4 eine Trägerplatte 5, die an der Fläche 2 durch Löten, Kleben oder auf eine andere geeignete Weise flächig befestigt ist, sowie eine Hülse 6 auf, die an der dem Pinolenhalter 21' abgewandten Oberflächenseite der beispielsweise einen rechteckförmigen Zuschnitt besitzenden Trägerplatte 5 derart gehalten ist, daß auf die Trägerplatte 5 übertragene mechanische Änderungen auch auf die Hülse 6 übertragen werden.

Die Hülse 6 besitzt eine durchgehende Bohrung 7 und ist bei der dargestellten Ausführungsform zumindest an der Innenfläche dieser Bohrung 7 lichtabsorbierend ausgeführt, und zwar beispielsweise durch eine entsprechende Farbgebung oder Schwärzung und/oder durch eine entsprechende Oberflächenstrukturierung.

Der Sensor 3 besteht weiterhin aus zwei Lichtleitern 8 und 9, die jeweils wenigstens eine, das eigentliche lichtleitende Element bildende Glasfaser 8'' bzw. 9'' und eine äußere, vorzugsweise mehrschichtige Isolierung bzw. Ummantelung 8''' bzw. 9''' aufweisen. In die Bohrung 7 der Hülse 6 reicht von jedem Ende einer der beiden Lichtleiter 8 bzw. 9 mit seinem Glasfaserelement 8'' bzw. 9'' hinein und zwar derart, daß sich die beiden Lichtleiter mit ihren dortigen Enden 8' bzw. 9' etwa in der Mitte der Hülse 6 bzw. deren Bohrung 7 mit einem vorgegebenen Abstand in Achsrichtung der Hülse 6 gegenüberliegen und somit zwischen den Enden 8' und 9' eine Lichtstrecke zwischen den Lichtleitern 8 und 9 in einem Luft- oder Gasraum gebildet ist. Der Außendurchmesser, den die Glasfaserelemente 8'' und 9'' zumindest an ihrer von der Hülse 6 umschlossenen Teillänge aufweisen, ist bei der dargestellten Ausführungsform minimal kleiner als der Durchmesser der Bohrung 7, so daß eine Bewegung der Lichtleiter 8 und 9 bzw. der Glasfaserelemente 8'' und 9'' in der Bohrung 7 möglich ist. Gehalten sind die Lichtleiter 8 und 9 an der Trägerplatte 5 durch eine Verblockung bzw. Abdeckung 10, die beispielsweise aus Kunststoffharz (beispielsweise Epoxydharz) besteht und auch die Hülse 6 umschließt und diese Hülse an der Trägerplatte 5 festlegt, zumindest jedoch zur Befestigung der Hülse 6 an der Trägerplatte 5 mit beiträgt.

Die beiden Lichtleiter 8 und 9 bzw. deren Glasfaserelemente 8'' und 9'' sind in geeigneter Weise in der Hülse 6 gehalten und verbinden den Sensor 3 mit einer opto-elektronischen Einheit 11, die zusammen mit dem Sensor 3 eine Sensoranordnung bildet. Die opto-elektronische Einheit besitzt eine Lichtquelle 12, an die der Lichtleiter 8 führt, sowie einen Lichtdetektor 13, an den der Lichtleiter 9 führt, so daß über den Lichtleiter 8 Licht der Lichtquelle 12 an den Sensor 3 geleitet wird und über den Lichtleiter 9 als Meßsignal Licht an den Lichtdetektor 13 gelangt, der ein von der Intensität dieses rückgeführten Lichtes abhängiges elektrisches Signal liefert. Dieses wird für die weitere Verwendung in einem Verstärker 14 verstärkt. Die Lichtquelle, die bevorzugt eine Leuchtdiode ist, der Lichtdetektor 13, der beispielsweise eine Fotodiode oder ein Fototransistor ist, sowie der Verstärker 14, der vorzugsweise ein integrierter Schaltkreis ist, sind Bestandteil der opto-elektronischen Einheit 11. Diese Einheit 11 weist bei der dargestellten Ausführungsform weiterhin eine Auswerteinheit 15 und einen Speicher 16 auf. Letztere können aber auch Bestandteil einer gesonderten Einheit, beipielsweise eines Rechners sein.

Dem Sensor 3 wird über den Lichtleiter 8 ein definierter Lichtstrom zugeführt. Dieser Lichtstrom tritt am Ende 8' aus dem Lichtleiter 8 in die Bohrung 7 bzw. in die zwischen den beiden Enden 8' und 9' liegende Lichtstrecke aus. Zumindest ein Teil dieses Lichtstromes tritt am Ende 9' in den Lichtleiter 9 ein und wird dann über diesen an den Lichtdetektor 13 zurückgeführt, so daß am Ausgang des Lichtdetektors ein von der Intensität des rückgeführten Lichtstrom abhängiges Signal anliegt, welches dann zu einem am Ausgang der opto-elektronischen Einheit 11 bzw. am Ausgang der Auswerteinheit 15 anstehenden Ausgangssignal führt.

Jede Biegung, Dehnung, Stauchung oder andere Veränderung der Fläche 2 wird über die Trägerplatte 5 auf die Befestigung der Lichtleiter 8 und 9 an der Trägerplatte 5 bzw. Hülse 6 übertragen und führt zu einer Änderung der relativen Lage der Enden 8' und 9' und damit auch zu einer Änderung der Intensität des über den Lichtleiter 9 zurückgeführten Lichtstromes sowie zu einer Änderung des elektrischen Signals an dem Lichtdetektor 13. Der über den Lichtleiter 9 zurückgeführte Lichtstrom ist die Differenz aus dem über den Lichtleiter 8 zugeführten Lichtstrom und den Verlusten (Dämpfung), die in der Bohrung 7 der Hülse 6 bzw. in dem dort gebildeten Absorptionsraum insbesondere durch die Änderung der relativen Lage der Enden 8' und 9' entstehen, und zwar beispielsweise dadurch, daß in Abhängigkeit von der relativen Lage diese Enden ein unterschiedlich großer Querschnitt des aus dem Ende 8' austretenden Lichtstromes auf das Ende 9' auftritt.

Zur Erzielung einer bestimmten Charakteristik für den Sensor 4 bzw. für die Abhängigkeit zwischen der Verformung des Pinolenhalters 21' an der Fläche 2 und der Größe des rückgeführten Lichtstromes im Lichtleiter 9 kann das Ende 8' und/oder das Ende 9' in unterschiedlichster Weise gestaltet sein, beispielsweise mit einer Krümmung zur Erzielung eines Linseneffektes usw.

In der opto-elektronischen Einheit wird das vom Verstärker 14 verstärkte Signal des Lichtdetektors 13 ausgewertet, und zwar durch die Auswerteinheit 15 anhand einer Eichkurve, die beispielsweise für jeden Sensor 3 oder jedes Sensorelement 4 individuell nach Fertigung ermittelt und beispielsweise in dem Speicher 16 der Auswerteinheit 15 gespeichert wird, so daß sich eine besonders hohe Meßgenauigkeit mit dem Sensor 3 bzw. mit der diesen Sensor aufweisenden Sensoranordnung erzielen läßt. Bevorzugt ist die Auswerteinheit so ausgeführt, daß in einem Analog-Digital-Wandler das vom Verstärker 14 gelieferte analoge Signal in ein digitales Signal umgewandelt wird, welches dann in der vorzugsweise eine Mikroprozessor enthaltenden Auswerteinheit 15 weiter verarbeitet bzw. ausgewertet wird. Die Eichkurve ist in diesem Fall bevorzugt als Datensatz in einem Speicher 16 der Auswerteinheit 15 gespeichert.

Die Überwachung und/oder Steuerung des Schweißprozesses mit dem Sensor 3 werden weder durch die hohen Schweißströme, noch durch ein hierdurch bedingtes Magnetfeld, noch durch die auftretenden Temperaturen beeinträchtigt. Die elektrische Einheit 15 kann an einem Bereich vorgesehen werden, der einen genügend großen räumlichen Abstand von dem Schweißbereich besitzt.

Grundsätzlich ist es auch möglich, das Sensorelement 4 so auszubilden, daß beide Lichtleiter 8 und 9 von einer Seite dieses Sensorelementes wegführen, wobei dann im Sensorelement der über den Lichtleiter 8 zugeführte Lichtstrom mittels wenigstens einer im Sensorelement 4 angeordneten optischen Umlenkeinrichtung (Spiegel, Prisma usw.) umgelenkt wird.

Diese Umlenkeinrichtung ist Bestandteil der Lichtstrecke oder außerhalb der Lichtstrecke vorgesehen.

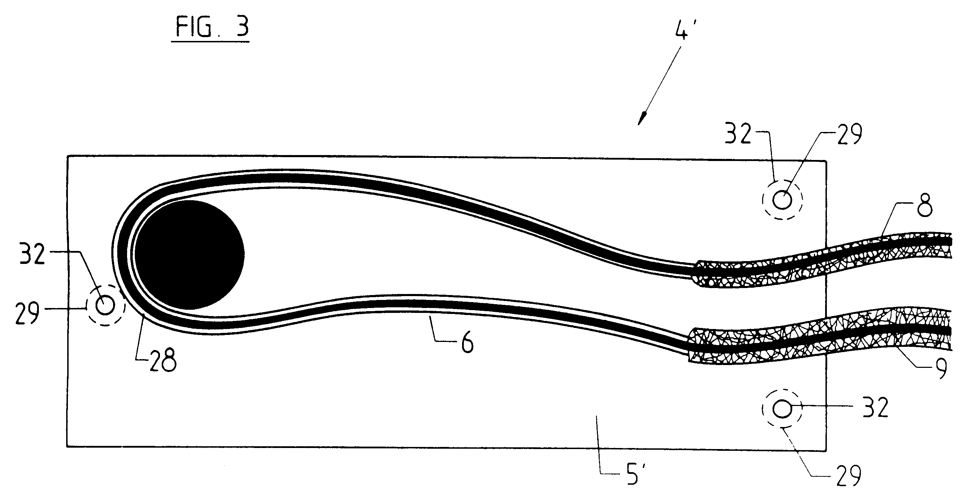

Eine Ausführung eines Sensorelementes für die Schweißzange 1 mit einer Umlenkeinrichtung außerhalb der Lichtstrecke ist in der Fig. 3 gezeigt. Die Umlenkeinrichtung besteht hier aus einer gebogenen Länge 28 eines der beiden Lichtleiter, nämlich des Lichtleiters 8.

Die Hülse 6 ist bei dieser Ausführungsform leicht gebogen ist, d.h. die Achse der Hülse liegt auf einem Kreis mit großem Durchmesser, wobei die Achse dieses Kreises (Krümmungsachse ) senkrecht zu den Oberflächenseiten der Trägerplatte verläuft. Diese Ausbildung hat auch den Vorteil, daß bereits kleine mechanische Veränderungen bzw. Biegungen an dem Pinolenhalter 21' erfaßt werden können, d. h. zu einer deutlichen Änderung der Intensität des rückgeführten Lichtstromes führen bzw. die Charakteristik des Sensorelementes 4' (Abhängigkeit der Intensität des rückgeführten Lichtstromes von der mechanischen Änderung) weitestgehend einen linearen Verlauf besitzt.

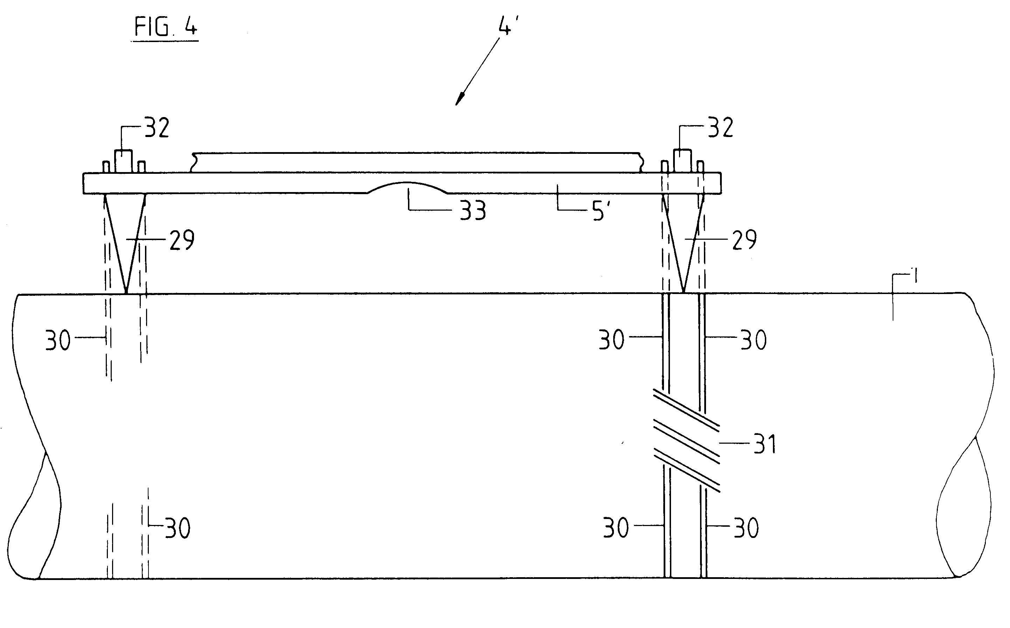

Fig. 4 zeigt den Pinolenhalter 21' der Schweißzange 1 und das Sensorelement 4' der Fig. 3 in Seitenansicht. Die Tragplatte 5' ist an ihrer der Hülse 6 abgewandten Unterseite mit insgesamt drei Füßchen 29 versehen, die derart angeordnet sind, daß sich eines dieser Füßchen im Bereich der einen Schmalseite der recheckförmigen Tragplatte 5' befindet, und zwar in der Mitte der Tragplatte, während die beiden anderen Füßchen am anderen Ende der Tragplatte in einer Achsrichtung senkrecht zur Längserstreckung dieser Tragplatte gegeneinander versetzt vorgesehen sind. Mit den Füßchen 29, die sich jeweils zu ihrem freien Ende hin kegelförmig verjüngen, stützt sich die Trägerplatte 5' an dem Pinolenhalter 21' bzw. an der kreiszylinderförmigen Fläche 2 ab.

Wie in der Fig. 3 angedeutet ist, sind an der Seite, an der die Lichtleiter 8 und 9 von der Trägerplatte 5' weggeführt sind, die beiden Füßchen 29 vorgesehen, und zwar beidseitig von den Lichtleitern 8 und 9. Im Bereich der gebogenen Teillänge 28 befindet sich das einzelne Füßchen 29.

Gehalten ist das Sensorelement 4' bzw. die Trägerplatte 5' am Meßobjekt durch zwei bandförmige Halteelemente 30, die jeweils eine Feder 31 aufweisen und mit ihren Enden an Zapfen 32 befestigt sind, die auch zur Halterung der Füßchen 29 dienen und über die Oberseite der Trägerplatte 5' vorstehen. Die Halteelemente 30 umschließen das Meßobjekt.

Wie die Fig. 3 zeigt, ist die Trägerplatte 5' dort, wo in der Hülse 6 die Lichtstrecke zwischen den Enden 8' und 9' gebildet ist, mit einem in der Dicke reduzierten Bereich 33 versehen, der sich senkrecht zur Längsrichtung der Trägerplatte 5' erstreckt. Dieser Bereich ist bei der dargestellten Ausführungsform nur an der Unterseite vorgesehen, so daß die Trägerplatte 5' eine ebene Auflagefläche für die Hülse 6 bildet und eine Verformung der Trägerplatte 5' bei einer mechanischen Veränderung des Meßobjektes aber auf dem Bereich der Lichtstrecke im wesentlichen konzentriert ist.

Mit den Füßchen 29 ist eine zuverlässige und problemlose Anordnung des Sensorelementes 4' an dem Pinolenhalter 21' auch bei beliebig geformter Außenfläche dieser Pinole möglich. Durch entsprechende Wahl der Länge der Füßchen 29, d.h. durch entsprechende Wahl des Abstandes der von diesen Füßchen gebildeten Halte- und Anlagebereiche von der Lichtstrecke bzw. deren Ebene kann die Empfindlichkeit des Sensorelementes 4' und damit des Sensors 3 insgesamt verändert bzw. auf einen gewünschten Wert eingestellt werden.

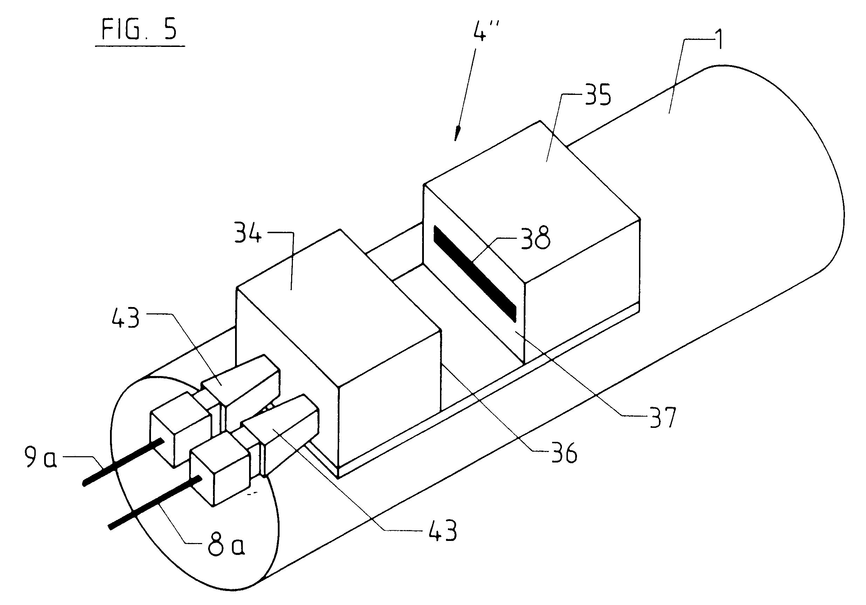

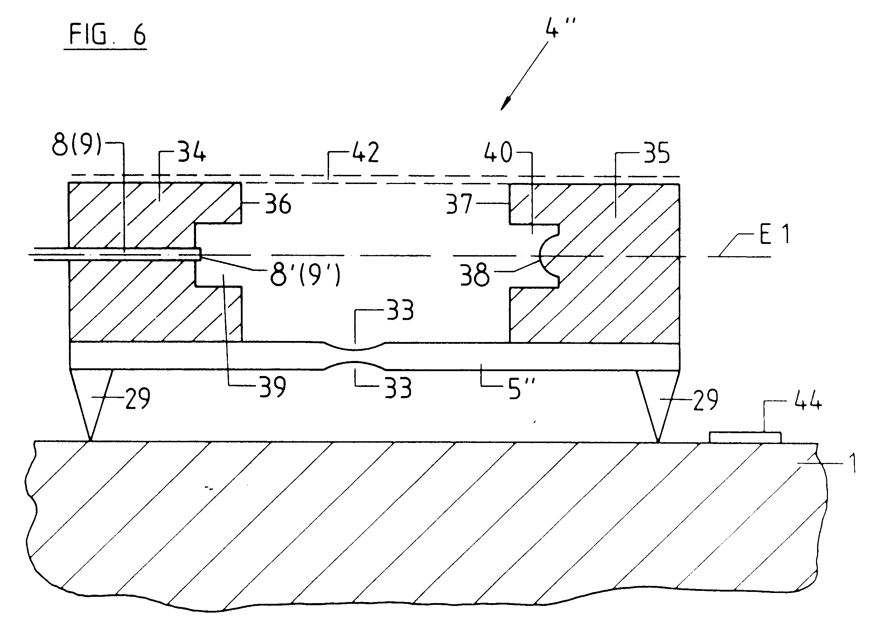

Die Figuren 5 und 6 zeigen in vereinfachter perspektivischer Darstellung bzw. in einem Längsschnitt als weitere Ausführungsform der Erfindung den Pinolenhalter 21' der Schweißzange 1 zusammen mit einem Sensorelement 4'', welches sich durch einen besonders einfachen und robusten Aufbau, durch eine hohe Empfindlichkeit und vor allem auch hohe Dynamik auszeichnet. Das Sensorelement besteht aus einer Trägerplatte 5'', die in etwa der Trägerplatte 5' entspricht, und beispielsweise aus Titan oder einem faserverstärkten Kunststoff gefertigt ist. Die Herstellung der Trägerplatte 5'' aus Titan oder bevorzugt aus dem faserverstärkten Kunststoff hat den Vorteil einer hohen Unempfindlichkeit dieser Platte gegen Störeinflüsse, insbesondere auch gegenüber Erwärmung, auch aufgrund des sich um die Pinole 21 bzw. den Pinolenhalter 21' während des Schweißens aufbauenden Magnetfeldes. Die Trägerplatte 5'' stützt sich wiederum mit drei Kegelstifte bzw. Füßchen 29, die aus Hartmetall hergestellt sind und sich in den Pinolenhalter 21' eindrücken, an diesem ab. Die Befestigung erfolgt wiederum mittels der in der Fig. 4 dargestellten Halter bzw. Befestigungselemente 30.

Auf der den Füßchen 29 abgewandten Oberseite der einen rechteckförmigen Zuschnitt aufweisenden Trägerplatte 5'' sind zwei Blöcke oder klotzartige Elemente 34 und 35 vorgesehen, und zwar jeweils ein Element 34 bzw. 35 an jedem Ende bzw. an jeder Schmalseite der Trägerplatte 5''. Bei der dargestellten Ausführungsform sind die Elemente 34 und 35 quaderförmig ausgebildet und an der Oberseite der Trägerplatte 5'' derart befestigt, daß die beiden Elemente 34 und 35 mit zwei einander zugewandten, im wesentlichen senkrecht zu der Oberseite der Trägerplatte 5'' sowie deren Längserstreckung liegenden Stirnseiten 36 und 37 voneinander beabstandet sind.

Mit 7 und 8 sind wieder die beiden Lichtleiter bezeichnet, die im Bereich ihrer Enden 8' und 9' im Element 34 gehalten bzw. fixiert sind, und zwar derart, daß diese Lichtleiter im Bereich dieser Enden mit ihren Achsen in einer Ebene liegen, die parallel zu der Oberseite der Trägerplatte 5'' und von dieser beabstandet vorgesehen ist, und außerdem die Achsen einen spitzen Winkel miteinander einschließen, dessen Schnitt- bzw. Scheitelpunkt im Bereich eines an der Stirnseite 37 des Elementes 35 gebildeten Spiegels 38 zumindest dann liegt, wenn der Pinolenhalter 21' bzw. das Sensorelement 4'' entlastet ist, d.h. kein Biegemoment auf die Trägerplatte 5'' ausgeübt wird. Der Spiegel 38 ist gegenüber der Stirnseite 37 zurückversetzt in einer Nut 39 gebildet bzw. vorgesehen, die an der Stirnseite 37 angebracht ist und mit ihrer längserstreckt parallel zur Obereite der Trägerplatte 5'' verläuft. Der Spiegel 38 ist weiterhin an seiner der Stirnseite 36 zugewandten Spiegelfläche um eine Achse konkav gekrümmt bzw. gewölbt, die in der Ebene E1 der Lichtstrecke oder parallel zu dieser Ebene liegt. Hierdurch wird erreicht, daß bereits eine kleine Auslenkung des Spiegels 38 eine große Änderung der an den Lichtleiter 8 übertragenen Lichtmenge bewirkt. Durch den Radius der Krümmung kann die Empfindlichkeit bzw. der Meßbereich des Sensors eingestellt werden. Die Stirnseite 36 des Elementes 34 ist mit einer der Nut 39 entsprechenden Nut 40 versehen, die in Längsrichtung der Trägerplatte 5'' und parallel zur Ebene E1 der Nut 39 gegenüberliegt. Am Boden der Nut 40 sind die beiden Enden 8' und 9' für den Lichtaustritt bzw. Lichtwiedereintritt vorgesehen.

Zwischen den beiden Elementen 34 und 35 ist die Trägerplatte 5'' sowohl an der Oberseite als auch an der Unterseite mit dem die Dicke der Trägerplatte vermindernden Bereich 33 versehen. Diese Bereiche 33, die sich deckungsgleich gegenüberliegen, definieren somit eine Achse 41, die parallel zur Ebene E1 und senkrecht zur Längserstreckung der Trägerplatte 5'' liegt und in deren Bereich die Trägerplatte 5'' bevorzugt gebogen wird, wenn bei Belastung des Pinolenhalters 21' diese einer Biegebeanspruchung unterliegt.

Durch ein Gehäuse bzw. eine Abdeckung 42 sind die Nuten 39 und 40 sowie der zwischen den Elementen 34 und 35 gebildete Raum nach außen hin zumindest staub- und lichtdicht verschlossen.

Dadurch, daß sowohl die Enden 8' und 9', als auch der Spiegel 38 jeweils gegenüber der Stirnseite 36 bzw. 37 zurückversetzt am Boden einer Nut 40 bzw. 39 vorgesehen sind, wird insbesondere der Einfluß von Streulicht ganz entscheidend reduziert.

Bei entlastetem Pinolenhalter 21' wird der am Ende 8' austretende Lichtstrom am Spiegel 38 so reflektiert, daß dieser Lichtstrom vollständig oder nahezu vollständig am Ende 9' in den Lichtleiter 9 eintritt. Wird beim Schließen der Schweißzange der Pinolenhalter 21' aufgrund der Elektrodenkraft KE, mit der die Polkappen 26 und 27 gegen die Bleche 18 und 19 anliegen, verformt, so tritt eine Biegung der Trägerplatte 4'' im Bereich der Achse 41 ein, mit der Folge, daß in Abhängigkeit von dieser Verformung und damit in Abhängigkeit von der Anpreß- bzw. Elektrodenkraft der Schweißzange 1 nur noch ein Teil der am Ende 8' austretenden Lichtmenge durch den Spiegel 38 an das Ende 9' für einen Eintritt in den Lichtleiter 9 reflektiert wird. Dieser Lichtverlust bzw. diese "Dämpfung" sind eine Funktion der Biegung des Pinolenhalters 21' und damit der an den Polkappen wirkenden Elektrodenkraft.

Wie in der Fig. 5 noch dargestellt ist, sind die beiden Lichtleiter 8 und 9 so ausgebildet, daß am Sensorelement 4'' bzw. an der dem Element 35 abgewandten Seite des Elementes 34 eine Trennung der Lichtleiter möglich ist. Hierfür sind dort Stecker 43 vorgesehen, wie sie für Lichtleiter bzw. Lichtleiterkabel verwendet sind.

Durch die Stecker 43 ist es möglich, das jeweilige Sensorelement 4'' vielfach und bequem von der betreffenden Schweißzange 1 bzw. von der Pinole 21 zu entfernen.

Die Lichtleiter 8 und 9 führen, wie weiter unten noch näher erläutert wird, von der jeweiligen Schweißzange 1 bis an die opto-elektronische Einheit 11, die räumlich getrennt von der Schweißzange 1 bzw. von einem diese Schweißzange aufweisenden Roboter vorgesehen ist. Um auch die Schweißzange insgesamt vom Roboter entfernen zu können und/oder den Roboter von einer die opto-elektronische Einheit mit umfassenden Steuergerät entfernen bzw. trennen zu können, sind vorzugsweise wenigstens zwei weitere Steckverbindungen in jedem Lichtleiter 8 bzw. 9 vorgesehen.

Das Sensorelement 4'' weist eine hohe Meßempfindlichkeit auf, d.h. mit ihm können Biegungen ab 1/10 000 mm erkannt bzw. erfaßt werden. Weiterhin weist das Sensorelement 4'' eine hohe dynamische Empfindlichkeit, d.h. eine Grenzfrequenz auf, die in der Größenordnung von 10 KHz liegt. Dies ist insbesondere bedeutsam, um am Beginn eines Schweißvorganges beim Schließen der Schweißzange auftretende Prellungen erfassen und auch Messen bzw. Bestimmen zu können, wann die Prellungen bzw. der entsprechende Prellschlag beendet ist. Die Erzeugung des von dem Beanspruchen der Pinole 21 abhängigen Lichtsignals und die Übertragung dieses Signals an die opto-elektronische Einheit 11 erfolgt mit Lichtgeschwindigkeit.

Mit 44 ist ein Temperaturfühler bezeichnet, der am Pinolenhalter 21' vorgesehen ist und die Temperatur dieses Pinolenhalters mißt. Der Temperaturfühler 44 liefert ein von der Temperatur des Pinolenhalters 21' abhängiges elektrisches Signal beispielsweise an die Auswerteinheit 15. Mit diesem Signal kann dann eine Kalibrierung oder Nachregelung in der Weise erfolgen, daß temperaturbedingte Verformungen der Trägerplatte 5'' und des Pinolenhalters 21' sowie hieraus evtl. resultierende Änderungen der übertragenen Lichtmenge das von der opto-elektronischen Einheit 11 gelieferte Meßergebnis nicht beeinflussen. Das Sensorelement 4'' ist selbstverständlich wiederum auf der innenliegenden konkaven oder auf der außenliegenden konvexen Seite des Pinolenhalters angeordnet, so daß die von der Anpreßkraft bzw. Schweißkraft abhängige elastische Biegung des Pinolenhalters 21' zu der Biegung der Trägerplatte 5'' im Bereich der Achse 41 führt.

Das Punktschweißen wird im wesentlichen durch drei Parameter bestimmt, von denen einer neben dem Schweißstrom und der Schweißzeit die Elektrodenkraft EK ist, d.h. diejenige Kraft, mit der die Elektroden oder Polkappen 26 und 27 gegen die miteinander zu verschweißenden Bleche 18 und 19 angepreßt sind. Der Schweißstrom kann mit herkömmlichen Mitteln gemessen werden. Die Schweißzeit wird über eine Steuerung eingegeben. Die Elektrodenkraft kann mit dem Sensorelement 4'' und dazugehörigen opto-elektrischen Einheit 11 gemessen werden, so daß eine ständige, sehr exakte Messung oder Überprüfung dieser Kraft während eines Schweißvorganges möglich ist.

Die Elektrodenkraft ist von ausschlaggebender Bedeutung für die Qualität eines Schweißpunktes, wie dies nachfolgend noch näher erläutert wird.

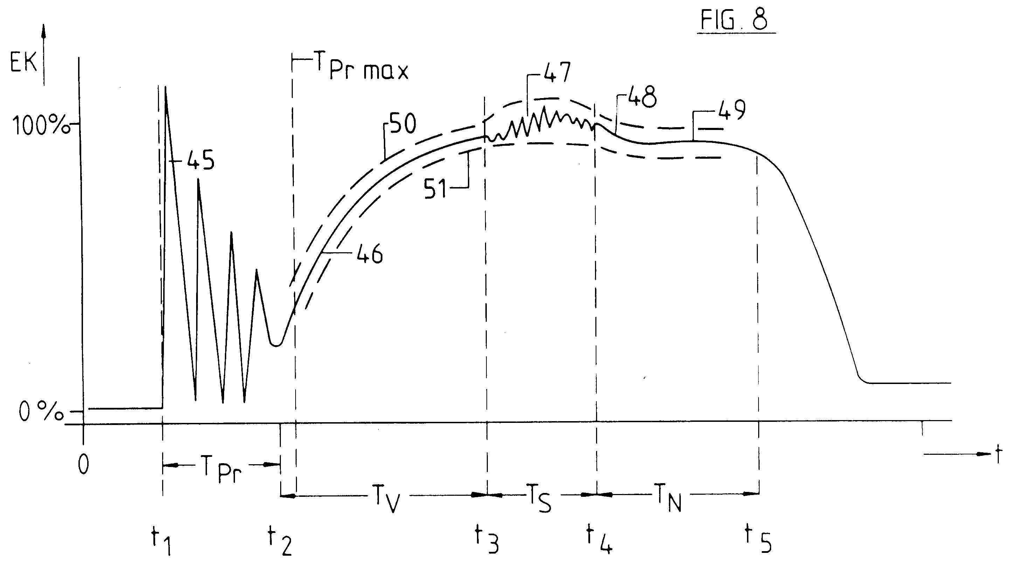

Fig. 8 zeigt in einem Diagramm die Elektrodenkraft EK in Abhängigkeit von der Zeit. Es wird hierbei davon ausgegangen, daß zum Zeitpunkt t1 die Schweißzange geschlossen wird, d.h. ein Aufsetzen der Elektroden bzw. Polkappen 26 und 27 auf die Bleche 18 und 19 erfolgt. Es ergibt sich zunächst eine ansteigende Elektrodenkraft und anschließend eine zeitliche Änderung dieser Elektrodenkraft, was auf Prellvorgänge bzw. auf einen sogenannten Prellschlag zurückzuführen ist, der einerseits durch die Eigenelastizität der Bleche 18 und 19, andererseits aber u.a. insbesondere auch durch die Eigenelastizität der Schweißzange 1 und dabei insbesondere durch die Eigenelastizität der Pinolenhalter 20' und 21', der Pinolen 20 und 21 usw. zurückzuführen ist, wobei diese periodischen Änderungen der Kraft auch abhängig sind von dem Zustand bzw. der Alterung der Pinolen 20 und 21 und der Gelenkstelle 22. Bei intakter Schweißzange 1 ist dieser Prellschlag zum Zeitpunkt t2 beendet. Für die Dauer T_{Pr} dieses Prellschlages läßt sich empirisch ein bestimmter Mittelwert ermitteln.

In der Fig. 8 wurde davon ausgegangen, daß der Zeitpunkt t2, an dem der Prellschlag tatsächlich beendet ist, noch vor Ablauf der Zeit bzw. des Zeitfenster T_{Prmax} erreicht ist.

Ab dem Zeitpunkt t2 erfolgt dann zunächst ein ständiger Anstieg der Elektrodenkraft entsprechend dem Verlauf 46, und zwar bis zum Erreichen einer maximalen Elektrodenkraft. Ist ein Wert erreicht, der etwa etwa 90% der maximalen Elektrodenkraft entspricht, und zwar zum Zeitpunkt t3, so erfolgt das Einschalten des Schweißstromes. Während des Schweißvorganges wird die Elektrodenkraft im wesentlichen konstant gehalten, wobei sich aber bedingt durch den Schweißvorgang gewisse Schwankungen ergeben, wie dies mit dem Verlauf 47 in der Fig. 8 angedeutet ist. Die Zeit zwischen t2 und t3 wird als Vorhaltezeit T_{V} bezeichnet. Während dieser Zeit kann bereits ein gewisser Elektrodenstrom zur Vorbereitung des Schweißvorganges fließen. Zum Zeitpunkt t4 ist die Schweißzeit T_{S} beendet, und zwar dann, wenn insbesondere auch bedingt durch Änderungen in der Materialstruktur der zu verschweißenden Bleche 18 und 19 eine Abnahme der Elektrodenkraft eintritt, wie dies mit dem Verlauf 48 in der Fig. 8 angegeben ist. Die Elektrodenkraft wird dann während einer Nachhaltezeit T_{N} auf einem konstanten Wert gehalten, und zwar bis zum Zeitpunkt t5. Anschließend erfolgt das Öffnen der Schweißzange 1.

Mit dem Sensorelement 4'' wird beispielsweise nach dem Schließen der Schweißzange 1 der Verlauf der Elektrodenkraft EK während des Prellschlages erfaßt und festgestellt, zu welchem Zeitpunkt dieser Prellschlag beendet ist. Ist dies nicht innerhalb des vorgegebenen Zeitfensters T_{Prmax} möglich, so wird hiermit von der Steuereinrichtung erkannt, daß mechanische Fehler vorliegen, beispielsweise fehlerhafte oder überalterte Pinolen, fehlerhafte Betätigungseinrichtung 25, fehlerhafte Lagerung usw. Ein Schweißpunkt wird nicht durchgeführt.

Mit dem Sensorelement 4'' wird dann weiterhin auch während der Vorhaltezeit T_{V}, während der Schweißzeit T_{S} und während der Nachhaltezeit T_{N} die Elektrodenkraft überwacht, und zwar dahingehend, daß diese innerhalb eines vorgegebenen Toleranzbereiches liegt, dessen obere und untere Grenzwerte beispielsweise jeweils durch eine Hüllkurve 50 und 51 festgelegt sind.

Mit dem Sensorelement 4'' wird dabei insbesondere erkannt, ob die Elektrodenkraft evtl. zu hoch ist, d.h. die Hüllkurve 50 übersteigt, oder zu gering ist, d.h. die Hüllkurve 51 unterschreitet.

Die Überwachung und Steuerung kann im Detail beispielsweise so erfolgen, daß nach Ablauf einer vorgegebenen Zeitperiode oder eines vorgegebenen Zeitfensters für die Vorhaltezeit T_{V} mittels des Sensorelementes 4'' überprüft wird, ob zu diesem Zeitpunkt 90% der maximalen Elektrodenkraft oder zumindest ein entsprechender, innerhalb des vorgegebenen Toleranzbereiches (Hüllkurven 50 und 51) liegender Wert erreicht ist. Ist dies der Fall, so erfolgt das Einschalten des Schweißstromes. Ist der erforderliche Wert für die Elektrodenkraft nicht erreicht, so erfolgt kein Einschalten des Schweißstromes. Vielmehr wird ein Fehlersignal erzeugt, welches beispielsweise den die Schweißzange 1 aufweisenden Schweiß-Roboter veranlaßt, einen weiteren Schweißpunkt an einer etwas versetzten Stelle erneut zu versuchen, und/oder dem Bedienungs- oder Wartungspersonal die Notwendigkeit einer Wartung bzw. Reparatur der Schweißzange 1 bzw. des Schweiß-Roboters anzeigt.

Weiterhin ist mit 11 des Sensorelementes 4'' auch eine Steuerung während der Vorhaltezeit T_{V} dahingehend möglich, daß dann, wenn die gemessene Elektrodenkraft 90% der maximalen Elektrodenkraft bzw. einem entsprechenden, noch zulässigen, d.h. im Toleranzbereich liegenden Wert entspricht, der Schweißstrom eingeschaltet wird, so daß bei ordnungsgemäß arbeitender Schweißzange 1 die Vorhaltezeit T_{V} tatsächlich nur bis zum Erreichen dieses Wertes für die Elektrodenkraft dauert, die Vorhaltezeit also keine zusätzlichen Sicherheits-Zeitperioden mit einschließen muß, wodurch die Zeitdauer des jeweiligen Schweißvorgangs erheblich reduziert werden kann, also eine wesentliche Steigerung der Leistung eines Schweiß-Rotobers (je Zeiteinheit hergestellte Schweißpunkte) möglich ist.

Auch bei dieser Steuerung erfolgt dann, wenn innerhalb des vorgegebenen Zeitfensters die 90%ige Elektrodenkraft nicht erreicht ist, kein Einschalten des Schweißstromes, sondern vielmehr ein Fehlersignal, welches beispielsweise in die Schweißzange 1 aufweisenden Roboter wiederum veranlaßt, einen weiteren Schweißpunkt an einer versetzten Stelle zu versuchen und/oder dem Bedienungs- bzw. Wartungspersonal die Notwendigkeit einer Wartung oder Reparatur der Schweißzange bzw. des Schweiß-Roboters anzeigt.

Während der Schweißzeit T_{S} wird im einfachsten Fall wiederum überwacht, ob die Elektrodenkraft innerhalb der vorgegebenen Toleranzen (Hüllkurven 50 und 51) liegt. Sofern dies der Fall ist, wird der betreffende Schweißpunkt als ordnungsgemäß ausgeführt quittiert. Ist dies nicht der Fall, so erfolgt beispielsweise über ein entsprechendes Fehlersignal eine Steuerung des Schweiß-Roboters in der Weise, daß ein weiterer, zusätzliches Schweißpunkt an einer versetzten Stelle vorgenommen wird, und/oder dem Bedienungs- bzw. Wartungspersonal wird die Notwendigkeit einer Wartung oder Reparatur der Schweißzange 1 und des zugehörigen Schweiß-Roboters angezeigt. Die Erfassung der Elektrodenkraft in der Schweißzeit T_{S} bedeutet aber auch, daß die durch den Übergang vom Alpha-Gitter in das Gamma-Gitter bedingten Volumenänderungen erfaßt werden sowie auch die Volumenänderungen beim sogenannten "Nachschmieden" in der Nachhaltezeit T_{N}. Damit kann der jeweilige Schweißpunkt (Schweißlinse) beurteilt werden und es ist eine klare Aussage über das Zustandekommen eines einwandfreien Schweißpunktes möglich.

Weiterhin ist es auch möglich, während der Schweißzeit T_{S} den abfallenden Verlauf 48 der Elektrodenkraft zu erfassen und hieraus ein Kriterium für das Abschalten des Schweißstromes und das Einleiten der Nachhaltezeit T_{N} abzuleiten. Dies bedeutet dann, daß die Schweißzeit T_{S} tatsächlich nur so groß ist, wie dies für die Ausführung des jeweiligen Schweißpunktes notwendig ist, die Schweißzeit also keine zusätzlichen Sicherheits-Zeit-Perioden enthalten muß. Auch dies führt zu einer Optimierung und Reduzierung der Gesamt-Schweißzeit.

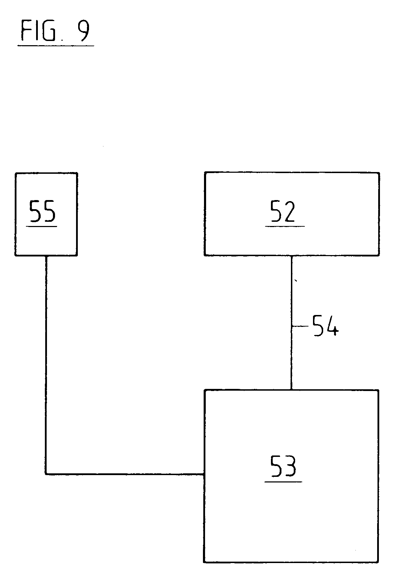

Fig. 9 zeigt in schematischer Darstellung einen die Schweißzange 1 aufweisenden Schweiß-Roboter 52 und die zugehörige, in einem Schaltschrank 53 untergebrachte Steuerung. Mit 54 ist eine flexible Leitung zwischen dem Roboter 52 und dem Schaltschrank 53 angedeutet. Diese Verbindung enthält auch die Lichtleiter 8 und 9, d.h. die opto-elektrische Einheit 11 ist in genügendem Abstand vom Schweißroboter 52 und dadurch insbesondere auch gegen äußere Störeinflüsse, vor allem gegen Magnetfelder usw. im Inneren des Schaltschrankes untergebracht. In diesem Schaltschrank 53 befinden sich dann auch die übrigen Steuerelemente für den Schweißroboter 52 bzw. für die Schweißzange 1, und zwar einschließlich der Elektronik zur Erfassung und Auswertung der vom Sensor bzw. Sensorelement 4'' gelieferten Signale.

Die beschriebenen Sensorelemente 4, 4', 4'' haben u.a. auch den Vorteil, daß die von der jeweiligen mechanischen Veränderung des Pinolenhalters 21' abhängigen Änderungen der übertragenen Lichtmenge sehr viel größer ist als solche Änderungen der Lichtmenge, die allein durch das Biegen der Lichtleiter 8 und 9 auftreten. Ein Biegen dieser Lichtleiter und der Verbindung 54, wie es bei der Bewegung des Schweißroboters 52 und/oder der Schweißzange 1 auftritt, führt somit nicht zu einer Beeinträchtigung oder Verfälschung des Meßergebnisses des jeweiligen Sensorelementes.

Neben den vorgenannten Vorteilen hat das Sensorelement 4'' durch seinen speziellen Aufbau u.a. auch den Vorteil, daß die Elemente 34 und 35, die im übrigen auch einstückig mit der Trägerplatte 5'' hergestellt werden können, sowie die an diesen Elementen vorgesehenen Nuten 39 und 40 und die am Element 34 vorgesehenen Kanäle zur Aufnahme der Lichtleiter 8 und 9 im Bereich ihrer Enden 8' und 9' mit so hoher Genauigkeit gefertigt werden können, daß das Sensorelement 4'' preiswert und produzierbar gefertigt werden kann.

In der Fig. 9 ist mit 55 ein Druck- bzw. Kraftmesser bezeichnet, der getrennt vom Schweiß-Roboter 52 angeordnet ist, und zwar im Bewegungsraum der Schweißzange 1 derart, daß während eines Eich-oder Kalibrier-Modus dieser Druckmesser 55 von der Schweißzange 1 erfaßt und zwischen den Polkappen 26 und 27 angeordnet werden kann. Mit Hilfe der Betätigungseinrichtung 25 werden diese dann gegen den Druckmesser 55 angepreßt, und zwar selbstverständlich ohne eingeschalteten Schweißstrom. Das vom Druckmesser 55 gelieferte Signal wird in einer Steuereinrichtung, beispielsweise in der im Schaltschrank 53 untergebrachten opto-elektronischen Einheit 11 mit dem vom Sensorelement 44 während dieses Kalibrier-Modus abgeleiteten Signals verglichen. Nötigenfalls wird dann eine in der opto-elektrischen Einheit vorgesehene Kalibriereinrichtung so nachgestellt, daß das vom Sensorelement 4'' abgeleitete Meßsignal dem von dem Druckmesser 55 gemessenen Meßwert entspricht. Die Kalibriereinrichtung ist im einfachsten Fall ein Verstärker mit veränderbarem Verstärkungsgrad.

Auch bei diesem Kalibrier-Modus, der periodisch nach einer vorgegebenen Anzahl von Schweißvorgängen bzw. Schweißpunkten wiederholt wird, kann ein eine notwendige Wartung oder Reparatur anzeigendes Signal erzeugt werden, und zwar dann, wenn die Differenz zwischen dem vom Sensorelement 4'' abgeleiteten Meßwert und dem vom Druckmesser 55 abgeleiteten Meßwert außerhalb eines vorgegebenen Toleranzbereiches liegt.

Die Erfindung wurde voranstehend an Ausführungsbeispielen beschrieben. Es versteht sich, daß Änderungen sowie Abwandlungen möglich sind, ohne daß dadurch der die Erfindung tragende Gedanke verlassen wird. So ist es beispielsweise möglich, das Sensorelement 4, 4' oder 4'' auch an der Pinole 21 oder an einem anderen Schweißzangenelement vorzusehen, welches sich in Abhängigkeit von der Elektrodenkraft elastisch verformt.

Bei den beschriebenen Ausführungsformen wurde davon ausgegangen, daß die Lichtquelle 12 im wesentlichen konstantes Licht mit einer vorgegebenen Intensität liefert. Grundsätzlich ist es aber auch möglich, eine Lichtquelle 12 vorzusehen, die ein sich in der Intensität nach einem vorgegebenen Muster veränderndes Licht, beispielsweise ein pulsierendes oder in der Intensität impulsförmig sich änderndes Licht abgibt, so daß hierdurch die Möglichkeit besteht, in der Auswerteinheit 15 durch spezielle Filter und/oder Programme eventuelle äußere Störeinflüsse bei der Auswertung des Meßsignals zu eliminieren.

Bei einer möglichen Ausführungsform sind am Sensorelement 4 oder 4' bzw. an der dortigen Trägerplatte 5 oder 5' wenigstens zwei Meß- bzw. Lichtstrecken in jeweils einer Hülse 6 oder in einer gemeinsamen Hülse zwischen Enden 8' und 9' von Lichtleitern gebildet. Diese Lichtstrecken sind dann in unterschiedlichen Achsrichtungen, vorzugsweise in senkrecht zueinander verlaufenden Achsrichtungen vorgesehen. Hierdurch ist es möglich, mechanische Veränderungen des Meßobjektes 1 in verschiedenen Achsen zu erfassen.

Bevorzugt sind der Lichtleiter 9 bzw. 9a und auch der Lichtdetektor 13 zweifach vorgesehen, so daß in der Einheit 11 zwei von der Elektrodenkraft abhängige Signale vorliegen und so durch entsprechende Verarbeitung oder Auswertung dieser Signale Störeinflüsse, beispielsweise Helligkeitsschwankungen der Lichtquelle 12, den Lichtübertragungsfaktor beeinflussende Einflüsse auf die Lichtleiter usw. automatisch kompensiert werden können. Die verwendeten Lichtleiter 8 und 9 bzw. 8a und 9a sind dabei bevorzugt zu einem Lichtleiterkabel zusammengefaßt, so daß äußere Einflüsse, beispielsweise ein Biegen auf alle Lichtleiter im gleichen Sinne wirken.

Bei einer bevorzugten Ausführungsform werden, nach einer Neueinrichtung einer Schweißzange, d.h. beispielsweise bei in Betriebnahme einer neuen Schweißzange oder einer reparierten bzw. neu ausgestatteten Schweißzange, mit dieser zunächst mehrere Probeschweißungen (Schweißpunkte) durchgeführt. Der Verlauf der Schweißkraft wird bei diesen Probeschweißungen jeweils gemessen und gespeichert. Hat beispielsweise die letzte Probe-Schweißung zu einem Schweißpunkt mit der geforderten Qualität geführt, so wird der bei diesem Schweißvorgang gespeicherte Verlauf der Elektrodenkraft als Soll-bzw. Referenzkurve festgelegt, zu der dann die beiden Hüllkurven 50 und 51 ermittelt und festgelegt werden.

Bei folgenden Schweißungen (Schweißpunkten) werden dann die so ermittelte Referenzkurve und Hüllkurven zur Steuerung und/oder Beurteilung des Schweißvorganges verwendet. Jeweils bei geöffneter Schweißzange wird der Nullpunkt des gelieferten Meßsignals automatisch korrigiert oder eingestellt

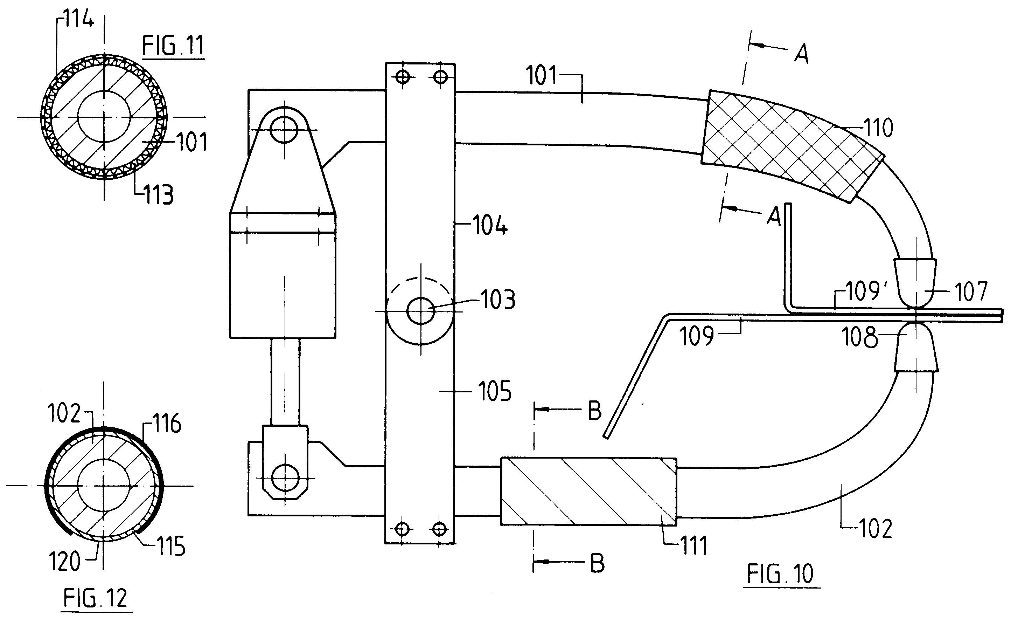

In Fig. 10 sind die beiden Pinolen der Punktschweißzange mit 101 und 102 bezeichnet. Diese Pinolen sind gelenkig über eine Gelenkstelle 103 und Gelenkarme 104, 105, die auch Pinolenhalter sein können, sowie über eine mit den Enden der Pinolen 101 und 102 verbundene Betätigungseinheit 106, z.B. einen Pneumatikzylinder, miteinander verbunden. Die Pinolen 101 und 102 sind in der Ausführungsform nach Fig. 10 gekrümmt (obere und untere Pinole sind mit unterschiedlicher Krümmung dargestellt) ausgeführt, ohne daß die Erfindung hierauf beschränkt ist. An den einander zugewandten Enden der Pinolen 101 und 102 sind Polkappen 107, 108 angeordnet, die die Schweißelektroden bilden, zwischen sich die beiden miteinander durch Punktschweißen zu verbindenden Bleche 109, 109' aufnehmen und in Kontakt mit ihnen stehen. Auf der Pinole 101 ist eine Isolierung 110 (Schnitt A-A), auf der Pinole 102 eine Isolierung 111 (Schnitt B-B) dargestellt.

Der Aufbau der Isolierung 10 nach Fig. 11 zeigt im Schnitt die Pinole 101, das Glasgewebeband 113, das die Pinole unmittelbar umschließt, und das Edelstahl-Kreuzgewebe 114, das mit dem Glasgewebeband 113 dauerhaft, z.B. über einen Epoxidharzkleber, verbunden ist.

Bei der Schnittdarstellung nach Fig. 12 ist die Pinole 102 von einem Glasgewebeband 115 umschlossen, des epoxidharzgetränkt ist, und das nach außen die geschlitzte Edelstahlhülse 116 aufnimmt.

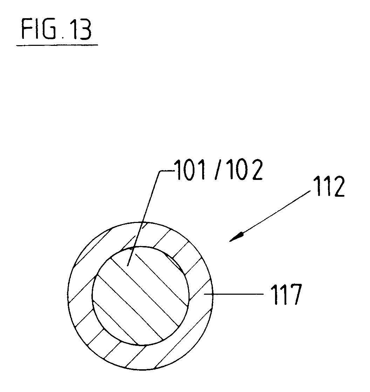

Die Figur 13 zeigt in ähnlicher Darstellung wie die Figuren 11 und 12 als weitere Ausführung eine Isolierung 112, die bevorzugt anstelle der Isolierungen 110 bzw. 111 verwendet wird.

Die Isolierung 112 besteht aus einer die Pinole 101 oder 102 umschließenden Ummantelung 117, die aus einer oder mehreren Schichten des Keramikgewebes oder aus einer Keramikwatte gebildet ist. Die Isolierung 112 hat den Vorteil, daß das Keramik-Material eine besonders scheuer- bzw. abriebfeste Außenfläche für die Isolierung 112 bildet, die (Außenfläche) auch eine hohe Standfestigkeit insbesondere gegenüber Blechen 109 und 109' mit scharfen Kanten aufweist.

Die Isolierung 112 läßt sich besonders einfach herstellen. Weiterhin ist bei der Isolierung 112 vermieden, daß sich an deren Außenfläche selbst bei längerem Einsatz Bereiche bilden können, die beispielsweise beim Auswechseln der Isolierung 112 die Gefahr von Verletzungen durch von der Isolierung wegstehende spitze oder nadelförmige Elemente bedingen.

### Aufstellung der verwendeten Bezugszeichen

- 1: Schweißzange
- 2: Fläche
- 3: Sensor
- 4, 4', 4'': Sensorelement
- 5, 5', 5'': Trägerplatte
- 6: Hülse
- 7: Bohrung
- 8, 9: Lichtleiter
- 8', 9': Ende
- 8'', 9'': Glasfaserelement
- 8''', 9''': Ummantelung
- 10: Abdeckung
- 11: opto-elektronische Einheit
- 12: Lichtquelle
- 13: Lichtdetektor
- 14: Verstärker
- 15: Auswerteinheit
- 16: Speicher
- 18, 19: Blech
- 20, 21: Pinole
- 22: Gelenkstelle
- 23, 24: Gelenkarm
- 25: Betätigungseinrichtung
- 26, 27: Polkappe
- 28: Teillänge
- 29: Füßchen
- 30: Befestigungselement
- 31: Feder
- 32: Zapfen
- 33: Bereich
- 34, 35: Element
- 36, 37: Stirnseite
- 38: Spiegel
- 39, 40: Nut
- 41: Achse
- 42: Abdeckung
- 43: Stecker
- 44: Temperaturfühler
- 45 - 49: Verlauf
- 50, 51: Hüllkurve
- 52: Schweiß-Roboter
- 53: Schaltschrank
- 54: Verbindung
- 55: Druckmesser

## Patentansprüche

1. Elektrische Schweißzange mit wenigstens einer Pinole, einem Pinolenhalter oder dgl. eine Schweißelektrode aufweisenden Schweißzangenelement, welches zum Schweißen durch eine Betätigungseinrichtung (25) mit der Schweißelektrode (26) gegen das Schweißgut (18,19) mit einer Elektrodenkraft anpreßbar ist, sowie mit wenigstens einem an eine elektrische Schaltungsanordnung (11) angeschlossenen Sensor, der mit wenigstens einem Teil (5,5',5'',6) eines Sensorelementes (4,4',4'') zur Erfassung oder Messung der Elektrodenkraft am Schweißzangenelement vorgesehen ist, wobei das Sensorelement (4,4',4'') derart am Schweißzangenelement (21,21') festgelegt ist, daß das Teil (5,5',5'',6) des Sensorelementes einer der Elektrodenkraft entsprechenden elastischen Verformung, vorzugsweise Biegung des Schweißzangenelementes (21') folgt, **dadurch gekennzeichnet**, daß an dem Teil (5, 5',5'',6) ein Lichtweg vorgesehen ist, der über eine Lichtleiteranordnung (8, 9) mit der Schaltungsanordnung (11) verbunden und derart ausgebildet ist, daß dem Lichtweg über die Lichtleiteranordnung (8, 9) Licht wenigstens einer Lichtquelle der Schaltungsanordnung (11) zugeführt wird und die über die Lichtleiteranordnung an die Schaltungsanordnung (11) rückübertragene Lichtmenge oder die im Lichtweg absorbierte Lichtmenge eine Funktion der Verformung des den Lichtweg aufweisenden Teils (5, 5', 5'', 6) des Sensorelementes (4, 4', 4'') ist.

2. Schweißzange nach Anspruch 1, dadurch gekennzeichnet, daß das Teil (5, 5', 5'', 6) des Sensorelementes (4, 4', 4''), in dem (Teil) die Lichtstrecke gebildet ist, über wenigstens zwei Halte- oder Anlagebereiche, die räumlich voneinander und auch räumlich von der Ebene der Lichtstrecke beabstandet sind, mit dem Schweißzangenelement verbunden ist.

3. Schweißzange nach Anspruch 1 oder 2, dadurch gekennzeichnet, daß die Lichtstrecke (8', 9') zwischen wenigstens zwei die Lichtleiteranordnung bildenden Lichtleitern (8, 9) vorgesehen ist.

4. Schweißzange nach Anspruch 3, dadurch gekennzeichnet, daß die Lichtstrecke zwischen einem ersten, einen Lichtaustritt bildenden Ende (8') eines ersten Lichtleiters (8) und einem einen Lichteintritt bildenden Ende (9') eines zweiten Lichtleiters gebildet ist.

5. Punktschweißzange nach einem der Ansprüche 1 - 4, gekennzeichnet durch Mittel zum Ein- und/oder Ausschalten des Schweißstromes in Abhängigkeit von einen von der elektronischen Schaltungsanordnung (11) ermittelten Meßsignal.

6. Schweißzange nach einem der Ansprüche 1 - 5, gekennzeichnet durch Mittel zur Überwachung, zum Anzeigen und/oder zum Vergleichen der mit dem Sensorelement (4, 4', 4'') ermittelten Elektrodenkraft mit vorgegebenen Werten.

7. Schweißzange nach einem der Ansprüche 2 - 6, dadurch gekennzeichnet, daß die Halte oder Anlagebereiche jeweils von einem, sich vorzugsweise zum freien Ende hin kegelförmig verjüngenden Füßchen gebildet sind, und daß diese Füßchen an dem Teil (5, 5', 5'', 6) des Sensorelementes vorgesehen sind.

8. Schweißzange nach einem der Ansprüche 1 - 7, dadurch gekennzeichnet, daß die Lichtstrecke in einem nach außen hin zumindest für das Spektrum des über den ersten Lichtleiter (8) zugeführten Lichtes lichtdicht verschlossenen Raum (7) des Teils (5, 5', 5'', 6) des Sensorelementes (4, 4', 4'') gebildet ist.

9. Schweißzange nach Anspruch 7 oder 8, dadurch gekennzeichnet, daß die beiden Enden (8', 9') der Lichtleiter (8, 9) einander axial gegenüberliegend vorgesehen sind.

10. Schweißzange nach einem der Ansprüche 1 - 9, dadurch gekennzeichnet, daß die Lichtstrecke im Lichtweg zwischen den Lichtleitern (8, 9) oder deren Enden (8', 9') wenigstens ein lichtreflektierendes Element, vorzugsweise einen Spiegel (38) aufweist.

11. Schweißzange nach einem der Ansprüche 1 - 10, dadurch gekennzeichnet, daß die Enden (8', 9') der Lichtleiter (8, 9) und/oder das lichtreflektierende Element (38) an einander gegenüberliegenden Vorsprüngen oder Elementen (34, 35) an dem Teil des Sensorelementes (4''), vorzugsweise an einer Seite der Trägerplatte (5''), vorgesehen sind.

12. Schweißzange nach einem der Ansprüche 1 - 11, dadurch gekennzeichnet, daß die Enden (8', 9') der Lichtleiter (8, 9) und/oder das lichtreflektierende Element (38) in Vertiefungen (39, 40) an einander gegenüberliegenden Flächen (36, 37) vorgesehen sind.

13. Schweißzange nach einem der Ansprüche, 1 - 12, dadurch gekennzeichnet, daß das Sensorelement (4, 4', 4'') wenigstens zwei in unterschiedlichen Achsrichtungen angeordnete Lichtstrecke (8', 9') aufweist.

14. Schweißzange nach einem der Ansprüche 1 - 13, dadurch gekennzeichnet, daß das über dem ersten Lichtleiter (8) zugeführte Licht ein konstanter oder ein sich in einem vorgegebenen Muster verändernder Lichtstrom ist.

15. Schweißzange nach einem der Ansprüche 1 - 14, gekennzeichnet durch eine opto-elektronische Einheit (11), die eine mit dem ersten Lichtleiter (8) zusammenwirkende Lichtquelle (12) sowie einen mit dem zweiten Lichtleiter (9) zusammenwirkende Lichtdetektor (13) aufweist.

16. Schweißzange nach einem der Ansprüche 1 - 15, gekennzeichnet durch eine Auswertelektronik oder -einheit (15) zur Bildung des Meßsignals anhand einer vorgegebenen Eichkurve.

17. Schweißzange nach einem der Ansprüche 1 - 16, dadurch gekennzeichnet, daß an wenigstens einer Pinole oder Pinolenhalter (104, 105) in einem Bereich, der beim Schweißen mit dem Schweißgut in Kontakt kommen kann, eine Isolierung (110, 111, 112) vorgesehen ist, die eine scheuer- bzw. abriebfeste Außenfläche aufweist, wobei diese Außenfläche von einem Überzug (114, 116) aus Edelstahl, bevorzugt von der Außenfläche eines Überzugs (117) aus einem Keramikgewebe und/oder Keramikwatte gebildet ist.

18. Schweißzange nach einem der Ansprüche 1 - 17, gekennzeichnet durch Mittel zum Kalibrieren des von der Schaltungsanordnung (11) gelieferten Meßsignals.

## Claims

1. Electrical welding tongs with at least one sleeve, a sleeve-holder or the like, a welding electrode with a welding tongs element, which can be pressed against the surfaces to be welded (18, 19) with an electrode's power, using an operating mechanism (25) with the welding electrode (26), and at least one sensor, connected to an electrical circuit array (11), the sensor having at least one component (5, 5', 5'', 6) of a sensor element (4, 4', 4'') for detecting or measuring the electrode power on the welding tongs element, with the sensor element (4, 4', 4'') being fixed to the welding tongs element (21, 21') in such a way that the component (5, 5', 5'', 6) of the sensor element follows a flexible change in shape, corresponding to the electrode power, and preferably a bending, of the welding tongs element (21'), distinguished by the fact that a light path is provided for on the component (5, 5', 5'', 6), which is connected to the circuit array (11) through a fibre-optic light guide array (8, 9), and is formed in such a way that light from at least one light source from the circuit array (11) is fed to the light path through the fibre-optic light guide array (8, 9) and the quantity of light carried back to the circuit array (11) through the fibre-optic light guide array, or the quantity of light absorbed in the light path, is dependent on the change in shape of the component (5, 5, 5'', 6) of the sensor element (4, 4', 4'') displaying the light path.

2. Welding tongs as Claim 1, distinguished by the fact that the component (5, 5', 5'', 6) of the sensor element (4, 4', 4'') in which (component) the light route is formed, is connected to the welding tongs element by means of at least two holding areas or locating areas, which are spatially separated from one another and also spatially separated from the plane of the light route.

3. Welding tongs as Claim 1 or 2, distinguished by the fact that the light route (8', 9') is provided for between two fibre-optic light guides (8, 9) forming the fibre-optic light guide array.

4. Welding tongs as Claim 3, distinguished by the fact that the light route is formed between a first end (8') of a first fibre-optic light guide (8) forming a light exit and an end (9') of a second fibre-optic light guide forming a light entrance.

5. Spot welding tongs as one of Claims 1-4, distinguished by a means of switching the welding currant on and off, depending on a measuring signal detected by the electronic circuit array (11).

6. Welding tongs as one of Claims 1-5, distinguished by a means by which the electrode power detected by the sensor element (4, 4', 4'') can be monitored, displayed and / or compared with pre-set values.

7. Welding tongs as one of Claims 2-6, distinguished by the fact that the holding area or locating area is formed in each case by a small stand, preferably conical, tapering towards the free and, and that this small stand is provided on the component (5, 5', 5'', 6) of the sensor element.

8. Welding tongs as one of Claims 1-7, distinguished by the fact that the light route is created in a closed area (7) of the component (5, 5', 5'', 6) of the sensor element (4, 4', 4'') which is light-tight, at least for the spectrum of light which is fed through the first fibre-optic light guide (8) of the component (5, 5', 5'', 6) of the sensor element (4, 4', 4'').

9. Welding tongs as Claim 7 or 8, distinguished by the fact that the two ends (8', 9') of the fibre-optic light guides (8, 9) are axially opposite to one another.

10. Welding tongs as one of Claims 1-9, distinguished by the fact that the light route has at least one light-reflecting element, preferably a mirror (38) in the light path between the fibre-optic light guides (8, 9) or their ends (8', 9').

11. Welding tongs as one of Claims 1-10, distinguished by the fact that the ends (8', 9') of the fibre-optic light guides (8, 9) and / or the light-reflecting element (38) are on projections or elements (34, 35) opposite one another on the component of the sensor element (4''), preferably on one side of the carrier plate (5'').

12. Welding tongs as one of Claims 1-11, distinguished by the fact that the ends (8', 9') of the fibre-optic light guides (8, 9) and / or the light-reflecting element (38) are in indentations (39, 40) on surfaces (36, 37) opposite to one another.

13. Welding tongs as one of Claims 1-12, distinguished by the fact that the sensor element (4, 4', 4'') has at least two light routes (8', 9') laid out in different axial directions.

14. Welding tongs as one of Claims 1-13, distinguished by the fact that the light fed through the first fibre-optic light guide (8) is a constant light flux, or a light flux changing in a pre-set pattern.

15. Welding tongs as one of Claims 1-14, distinguished by an opto-electronic unit (11), which has a light source (12) co-operating with the first fibre-optic light guide (8) and a light detector (13) co-operating With the second fibre-optic light guide (9).

16. Welding tongs as one of Claims 1-15, distinguished by an electronic analysis mechanism or an analysis unit (15) for forming the measuring signal, with reference to a pre-set calibration curve.

17. Welding tongs as one of Claims 1-16, distinguished by the fact that insulation (110, 111, 112) is provided for, on at least one sleeve or sleeve-holder (104, 105), in an area which can come into contact with the surfaces to be welded during welding, in the shape of an external surface resistant to chafing and / or abrasion, this external surface being formed by a protective layer (114, 116) made of special steel, preferably by the external surface of a protective layer (117) made of ceramic fabric and / or ceramic padding.

18. Welding tongs as one of Claims 1-17, distinguished by a means of calibrating the measuring signal supplied by the circuit array (11).

## Revendications

1. Pince de soudage électrique comprenant au moins une broche, un porte-broche ou un élément similaire de pince de soudage présentant une électrode de soudage, élément qui, en vue de la soudure, peut être appliqué au moyen d'un dispositif de manoeuvre (25) pour maintenir l'électrode de soudage contre la pièce à souder (18, 19) avec une force d'électrode, ainsi qu'au moins un détecteur connecté à un circuit de commande électrique (11), lequel détecteur comporte au moins une partie (5, 5', 5'', 6) d'un élément détecteur (4, 4', 4'') pour la saisie ou la mesure de la force d'électrode sur l'élément de pince de soudage, l'élément détecteur (4, 4', 4'') étant fixé à l'élément de pince de soudage (21, 21') de manière telle que la partie (5, 5', 5'', 6) de l'élément détecteur suit une déformation élastique, avantageusement une flexion, de l'élément de pince de soudure (21'), correspondant à la force d'électrode, caractérisée en ce qu'il est prévu sur la partie (5, 5', 5'', 6) un chemin optique qui est relié par une agencement de guides de lumière (8, 9) au circuit de commande (11) et est réalisé de telle sorte que la lumière d'au moins une source lumineuse du circuit de commande (11) soit conduite au chemin optique par l'agencement de guides de lumière (8, 9) et que la quantité de lumière renvoyée au circuit de commande (11) par l'agencement de guides de lumière ou la quantité de lumière absorbée dans le chemin optique soit une fonction de la déformation de la partie (5, 5', 5'', 6) de l' élément détecteur (4, 4', 4'') comportant le chemin optique.

2. Pince de soudage selon la revendication 1, caractérisée en ce que la partie (5, 5', 5'', 6) de l'élément détecteur (4, 4', 4''), dans laquelle est formée la voie optique, est reliée à l'élément de pince de soudure par au moins deux zones de maintien ou d'attache qui sont séparées dans l'espace l'une de l'autre et aussi dans l'espace du plan de la voie optique.

3. Pince de soudage selon la revendication 1 ou 2, caractérisé en ce que la voie optique (8', 9') est prévue entre au moins deux guides de lumière (8, 9) formant l'agencement de guides de lumière.

4. Pince de soudage selon la revendication 3, caractérisée en ce que la voie optique est formée entre une première extrémité (8'), constituant une sortie optique, d'un premier guide de lumière (8) et une extrémité (9'), constituant une entrée optique, d'un second guide de lumière.

5. Pince de soudage selon l'une quelconque des revendications 1 à 4, caractérisée par des moyens pour établir et/ou interrompre un courant de soudure en fonction d'un signal de mesure détecté par le circuit de commande électronique (11).

6. Pince de soudage selon l'une quelconque des revendications 1 à 5, caractérisée par des moyens de surveillance pour le relevé et/ou la comparaison de la force d'électrode détectée par l'élément détecteur (4, 4', 4'') avec une valeur prédéterminée.

7. Pince de soudage selon l'une quelconque des revendications 2 à 6, caractérisée en ce que les zones de maintien ou d'attache sont constituées chacune de pattes se rétrécissant avantageusement vers leur extrémité libre de façon conique, et en ce que ces pattes sont prévues sur la partie (5, 5', 5'', 6) de l'élément détecteur.

8. Pince de soudage selon l'une quelconque des revendications 1 à 7, caractérisée en ce que la voie optique est formée dans un espace (7) de la partie (5, 5', 5'', 6) de l'élément détecteur (4, 4', 4'') fermé de manière étanche à la lumière vers l'extérieur au moins pour le spectre de la lumière conduite par le premier guide de lumière (8).

9. Pince de soudage selon la revendication 7 ou 8, caractérisée en ce que les deux extrémités (8', 9') des guides de lumière (8, 9) sont prévus axialement à l'opposé l'une de l'autre.

10. Pince de soudage selon l'une quelconque des revendications 1 à 9, caractérisée en ce que la voie optique présente dans le chemin optique entre les guides de lumière (8, 9) ou leurs extrémités (8', 9'), au moins un élément réfléchissant la lumière, de préférence un miroir (38).

11. Pince de soudage selon l'une quelconque des revendications 1 à 10, caractérisée en ce que les extrémités (8', 9') des guides de lumière (8, 9) et/ou l'élément réfléchissant la lumière (38) sont prévus sur des éléments (34, 35) ou des saillies opposées l'une à l'autre sur la partie de l'élément détecteur (4''), avantageusement sur une côté de la platine de support (5'').

12. Pince de soudage selon l'une quelconque des revendications 1 à 11, caractérisée en ce que les extrémités (8', 9') des guides de lumière (8, 9) et/ou l'élément réfléchissant la lumière (38) sont prévus dans des évidements (39, 40) sur des surfaces (36, 37) opposées l'une à l'autre.

13. Pince de soudage selon l'une quelconque des revendications 1 à 12, caractérisée en ce que l'élément détecteur (4, 4', 4'') présente au moins deux voies optiques (8', 9') disposées dans des directions d'axe différentes.

14. Pince de soudage selon l'une quelconque des revendications 1 à 13, caractérisée en ce que la lumière conduite par le premier guide de lumière (8) est un courant lumineux constant ou modulé selon un motif prédéterminé.

15. Pince de soudage selon l'une quelconque des revendications 1 à 14, caractérisée par une unité opto-électronique (11) qui présente une source lumineuse (12) coopérant avec le premier guide de lumière (8) ainsi qu'un détecteur de lumière (13) cooopérant avec le second guide de lumière (9).

16. Pince de soudage selon l'une quelconque des revendications 1 à 15, caractérisée par une unité (15) ou une électronique d'évaluation pour former le signal de mesure sur la base d'une courbe étalon prédéterminée.

17. Pince de soudage selon l'une quelconque des revendications 1 à 16, caractérisée en ce qu'il est prévu sur au moins une broche ou support de broche (104, 105), dans une zone qui peut venir pendant la soudure au contact de la pièce à souder, un isolant (110, 111, 112) présentant une surface extérieure résistant à l'usure et à l'abrasion, cette surface extérieure étant formée d'un revêtement (114, 115) de métal précieux, ou de préférence de la surface extérieure d'un revêtement (117) d'une toile ou ouate de céramique.

18. Pince de soudage selon l'une quelconque des revendications 1 à 17, caractérisée par des moyens de calibrage du signal de mesure délivré par le circuit de commande (11).
